# EUROPÄISCHE PATENTANMELDUNG

(11) **EP 4 147 613 A1**
(43) Veröffentlichungstag der Anmeldung: **15.03.2023**
(21) Anmeldenummer: 22186825.0
(22) Anmeldetag: 26.07.2022
(51) Int. Cl.: A47J 31/36, A47J 31/46

(54) **BRÜHEINHEIT MIT HYDRAULISCHEN TAMPERMITTELN EIN VERFAHREN ZUM BETRIEB EINER SOLCHEN BRÜHEINHEIT**

(30) Priorität: 10.09.2021 DE 102021123545
(71) Anmelder: Eugster/Frismag AG, 8580 Amriswil (CH)
(72) Erfinder: Riessbeck, Wolfgang, 8597 Landschlacht (CH); van de Löcht, Hendrik, 8586 Riedt bei Erlen (CH)
(74) Vertreter: Patent- und Rechtsanwälte Behrmann Wagner PartG mbB

(57) **Zusammenfassung**

Die Erfindung betrifft eine Brüheinheit (1) für eine Getränkezubereitungsvorrichtung, insbesondere eine Kaffee- und/oder Espressomaschine, mit einer Brühkammer (2), die zur Aufnahme eines Getränkesubstrats (15), insbesondere gemahlenen Kaffeepulvers, über eine Öffnung (7) der Brühkammer (2) eingerichtet ist und einen, bevorzugt der Öffnung (7) gegenüberliegenden, Brühkammerboden (2.2) und einen an den Brühkammerboden (2.2) angrenzenden, bevorzugt zylindrischen, insbesondere die Öffnung (7) begrenzenden, Brühkammermantel (2.1) aufweist, sowie mit einem Brühkopf (5), der ein Tampermittel (8) zum Verdichten des Getränkesubstrats (15) aufweist, das beweglich gegenüber der Brühkammer (2) gelagert ist und in einer Brühposition zumindest teilweise in die Brühkammer (2) eingeführt ist, wobei beim Einführen des Tampermittels (8) in die Brühkammer (2) eine Linearbewegung des Tampermittels (8) entlang des Brühkammermantels (2.1) eine Verdichtung des Getränkesubstrats (15) zwischen einer Anpressoberfläche (10) des Tampermittels (8) und einer Druckfläche (13) eines Gegenstücks (14) bewirkt. Erfindungsgemäß ist vorgesehen, dass das Tampermittel (8) brühfluidleitend mit einer Brühfluidzuführung (16) verbunden ist, wobei ein Hydraulikzylinder (3) des Brühkopfes (5) ebenfalls brühfluidleitend mit der Brühfluidzuführung (16) verbunden ist, dessen Arbeitskolben (31) so mit dem Tampermittel (8) verbunden ist, dass ein Füllen des Hydraulikzylinders (3) mit Brühfluid (4) eine Bewegung des Tampermittels (8) in Richtung des Gegenstücks (14) bewirkt und das Tampermittel (8) über die Anpressoberfläche (10) einen Tamper-Druck auf das Getränkesubstrat (15) aufbringt,wobei der Hydraulikzylinder **(3)** fluidleitend zwischen der Brühfluidzuführung **(16)** und dem Tampermittel **(8)** angeordnet ist und ein selbsttätiges oder eigengesteuertes Ventil **(6),** das bevorzugt als Gegendruckventil ausgebildet ist, am Übergang zwischen dem Tampermittel **(8)** und dem Hydraulikzylinder **(3)** so angeordnet ist, dass es beim Erreichen eines Brühdrucks in dem Hydraulikzylinder **(3)** eine verschließbare Fluidverbindung zwischen dem Hydraulikzylinder **(3)** und dem Tampermittel **(8)** freigibt,so dass im geöffneten Zustand des Ventils (6) das Brühfuid (4) aus dem Hydraulikzylinder (3) in die Brühkammer (2) fließen kann, und das Ventil (6) den Abfluss des Brühfluids (4) in die Brühkammer (2) reguliert und derart dimensioniert und ausgestaltet ist, dass unabhängig von der Menge des Getränkesubstrats (15) in der Brühkammer (2) ein definierter Tamper-Druck auf das Getränkesubstrat (15) aufbringbar ist.

## Beschreibung

Die vorliegende Erfindung betrifft eine Brüheinheit für eine Getränkezubereitungsvorrichtung, insbesondere eine Kaffee- und/oder Espressomaschine, nach dem Oberbegriff des Anspruchs 1. Weiterhin betrifft die vorliegende Erfindung eine Getränkezubereitungsvorrichtung, insbesondere eine Kaffee- und/oder Espressomaschine, mit einer solchen Brüheinheit. Weiterhin betrifft die Erfindung ein Verfahren zum Betrieb einer Brüheinheit für eine Getränkezubereitungsvorrichtung, insbesondere ein Verfahren zum Durchführen eines Brühvorgangs, nach dem Oberbegriff des Anspruchs 14.

Bei gattungsgemäßen Getränkezubereitungsvorrichtungen, beispielsweise Kaffee- und/oder Espressomaschinen sowie Kaffee- und/oder Espressovollautomaten, kommen bereits Brüheinheiten in verschiedenen Ausgestaltungen zum Einsatz. Die Brüheinheit übernimmt dabei die Funktion ein Getränkesubstrat, beispielsweise Kaffeepulver, in einer ersten Stellung aufzunehmen, beispielsweise an einem Auslass oder Ausgang eines Mahlwerks oder einer Mühle, anschließend das Getränkesubstrat zu verdichten, mit einem Brühfluid zu versetzen oder auszulaugen und im Anschluss an einen Brühvorgang oder zum Abschluss eines Brühvorgangs das aufgebrühte oder ausgelaugte Getränkesubstrat auszuwerfen.

Zu diesen Zwecken verfügen die bekannten Brüheinheiten über Brühkammern, die entsprechend zwischen verschiedenen Positionen oder Stellungen innerhalb der Brüheinheit bewegt, verstellt oder aus der Brüheinheit entnommen werden können. So ist beispielsweise aus der DE 20 2020 100 937 U1 eine als Siebträger ausgebildete entnehmbare Brüheinheit bekannt, die mittels eines druckbeaufschlagbaren Kolbens verschließbar ist.

Es hat sich als essentiell erwiesen, dass vor_oder zu Beginn des Brühvorgangs oder Brühprozesses das Getränkesubstrat in der Brühkammer verdichtet wird. Zu diesem Zweck sind aus dem Stand der Technik bereits Brühköpfe, gegebenenfalls versehen mit vorstehenden Brühzylindern oder Brühkolben, bekannt, die bei der Überführung der Brühkammer in eine Verschlussstellung in eine Öffnung der Brühkammer, in der das Getränkesubstrat aufgenommen ist, eingetaucht oder eingeführt werden und dabei vor Beginn des Brühvorgangs mit einer Anpressoberfläche das Getränkesubstrat in der dann vom Brühkopf verschlossenen und abgedichteten Brühkammer verdichten. Nach dem Verdichten des Getränkesubstrats in der Brühkammer, dem sogenannten Tampern, kann über entsprechende Öffnungen, Zuleitungen und Pumpmittel des Brühfluid in die Brühkammer eingeleitet und dadurch der Brühvorgang initiiert werden.

Auf die Anmelderin geht dabei ein Konzept einer Brühkammer zurück, bei der die Brühkammer über Gleitsteine mit einer Kurbelwelle mechanisch verbunden ist. Mittels Drehbewegungen an der Kurbelwelle wird die Brühkammer in Richtung eines federnd gelagerten Brühkopfes oder Brühkolbens bewegt. Der Nachteil einer Lösung und der Einsatz eines federnd gelagerten Brühkopfes oder Brühkolbens, wie er beispielsweise in der EP 1 217925 A1 beschrieben ist, besteht im verhältnismäßig großen Bauraum für den federnd gelagerten Brühkopf. Dieser große Platzbedarf des Brühkopfes widerstrebt jedoch dem Wunsch nach möglichst kompakten Getränkezubereitungsvorrichtungen. Um einen übermäßig großen Bauraum zu vermeiden oder zu verkleinern, kann vorgesehen sein, dass die Druckfedern zur gefederten Lagerung des Brühkopfes mit entsprechend hoher Richtgröße oder Federrate eingesetzt werden. Dies wiederum hat einen nachteiligen Einfluss auf den Verdichtungsprozess des Getränkesubstrats, bei dem dann abhängig von der jeweiligen Pulvermenge in der Brühkammer und dem daraus resultierenden Federweg der Druckfedern zur Lagerung des Brühkopfes oder Brühkolbens das Getränkesubstrat mit sehr unterschiedlichen Anpresskräften erfolgt, was wiederum einen unerwünschten nachteiligen Einfluss auf das nachfolgende Aufbrühen und das daraus resultierende Getränk ausübt.

Weiterhin sind aus dem Stand der Technik bereits Ansätze zum Tampern bekannt, bei denen ein Tampermittel mittels eines Arbeitszylinders bewegt wird. Dabei sind Ansätze bekannt, nach denen das Tampermittel hydraulisch zwischen einer Ausgangsposition und einer Brühposition bewegt wird. Jedoch haben die bisherigen Lösungen bzgl. des hydraulischen Tamperns den Nachteil, dass das Tampern entweder extern, d. h. außerhalb der Brüheinheit, beispielsweise vor dem Einsetzen eines Siebträgers, erfolgen muss oder zusätzliche Kräfte, beispielsweise mittels eines zusätzlichen Hydraulikkreislaufes aufgebracht werden müssen. Gemäß der in der DE 92 14 283 U1 beschriebenen gattungsgemäßen Lösung zum hydraulischen Tampern sind sowohl Gegenstück als auch Tampermittel beweglich ausgebildet, was einen erhöhten Bauraumbedarf und Steuerungsaufwand bedingt.
Zusammenfassend führt der Aufbau gattungsgemäßer Brüheinheiten dazu, dass verhältnismäßig komplexe fluidtechnische oder mechanische Konstruktionen und dazugehörige Schaltungssysteme realisiert werden müssen, was einerseits zu einem unerwünschten hohen Bauraumbedarf führt und andererseits auch bedeutet, dass ein verhältnismäßig hoher Steuerungsaufwand betrieben werden muss, um die mechanischen Komponenten, die Fluidkreise und/oder Hydraulikkreise dauerhaft zuverlässig anzusteuern um den richtigen Zeitpunkt des Brühprozesses zu aktivieren und zu deaktivieren.

Vor diesem Hintergrund stellt die vorliegende Erfindung die Aufgabe eine Brüheinheit und ein Verfahren zum Betrieb einer solchen Brüheinheit vorzuschlagen, die die Nachteile im Stand der Technik überwinden und insbesondere eine baulich und regelungstechnisch oder steuerungstechnisch einfache Umsetzung ermöglichen.

Diese Aufgabe wird gelöst durch eine Brüheinheit für eine Getränkezubereitungsvorrichtung, insbesondere eine Kaffee- und/oder Espressomaschine, die eine Brühkammer zur Aufnahme eines Getränkesubstrats, insbesondere gemahlenen Kaffeepulvers, und einen Brühkopf zur Einbringung des Brühfluids aufweist. Die Brühkammer ist zur Aufnahme des Getränkesubstrats über eine Öffnung mit der Brühkammer eingerichtet und weist einen Brühkammerboden und einen an dem Brühkammerboden angrenzenden Brühkammermantel auf. Der Brühkammermantel ist bevorzugt zylindrisch ausgestaltet. Weiter bevorzugt ist die Brühkammer so ausgestaltet, dass die Öffnung dem Brühkammerboden gegenüberliegend angeordnet ist, so dass die Brühkammer in der Form eines einseitig geschlossenen Hohlzylinders ausgebildet ist. Zudem begrenzt der Brühkammermantel bevorzugt die Öffnung der Brühkammer. Der Brühkopf weist erfindungsgemäß ein Tampermittel zum Verdichten des Getränkesubstrats auf, das beweglich gegenüber der Brühkammer gelagert und in Brühposition zumindest teilweise in die Brühkammer eingeführt ist. Beim Einführen des Tampermittels in die Brühkammer bewirkt eine Linearbewegung des Tampermittels entlang des Brühkammermantels eine Verdichtung des Getränkesubstrats zwischen einer Anpressoberfläche des Tampermittels und einer Druckfläche eines Gegenstücks.

Erfindungsgemäß zeichnet sich die Brüheinheit dadurch aus, dass das Tampermittel und ein Hydraulikzylinder des Brühkopfes brühfluidleitend mit einer Brühfluidzuführung verbunden sind, wobei der Arbeitskolben des Hydraulikzylinders so mit dem Tampermittel verbunden ist, dass ein Füllen des Hydraulikzylinders mit Brühfluid eine Bewegung des Tampermittels in Richtung des Gegenstücks bewirkt und das Tampermittel über die Anpressoberfläche einen Tamperdruck auf das Getränkesubstrat aufbringt. Dabei wurde es als erfindungswesentlich erkannt, dass der Hydraulikzylinder fluidleitend zwischen der Brühfluidzuführung und dem Tampermittel angeordnet ist und ein selbsttätiges oder eigengesteuertes Ventil am Übergang zwischen dem Tampermittel und dem Hydraulikzylinder so angeordnet ist, dass das Ventil beim Erreichen eines Brühdrucks in den Hydraulikzylinder eine verschließbare Fluidverbindung zwischen dem Hydraulikzylinder und dem Tampermittel freigibt, so dass im geöffneten Zustand des Ventils das Brühfluid aus dem Hydraulikzylinder in die Brühkammer fließen kann und das Ventil den Abfluss des Brühfluids in die Brühkammer reguliert und derart dimensioniert und ausgestaltet ist, dass, insbesondere bis zu dem oder in dem Moment der Öffnung des Ventils, unabhängig von der Menge des Getränkesubstrats ein definierter oder voreingestellter Tamperdruck auf das Getränkesubstrat aufbringbar ist. Bevorzugt ist das Ventil als Gegendruckventil ausgebildet.

Damit macht sich die erfindungsgemäße Brüheinheit den Umstand zunutze, dass im Rahmen des Brühvorgangs oder des Infusionsvorgangs sowieso unter Druck stehendes Fluid, nämlich das Brühfluid, in eine Infusionsbaugruppe und anschließend in die Brühkammer eingeleitet werden muss. Im Rahmen der Erfindung bezeichnet der Begriff Infusionsbaugruppe, eine Baugruppe der Brüheinheit, in die zumindest das Ventil aufgenommen ist. Weitere Bestandteile der Infusionsbaugruppe können beispielsweise das Tampermittel und/oder der Arbeitskolben sein. Dementsprechend beruht die Grundidee der vorliegenden Erfindung darauf, dass das Brühfluid bevor es in die Brühkammer eindringt oder eingeleitet wird eine weitere Funktionalität oder eine weitere Funktion erfüllt, indem nämlich das Brühfluid zunächst den Hydraulikzylinder füllt, der die Bewegung des Tampermittels entlang des Brühkammermantels zur Verdichtung des Getränkesubstrats mit dem Tampermittel bewirkt. Damit ist, im Gegensatz zum Stand der Technik, kein separater Fluidfluss oder kein separater Fluidkreis zusätzlich zum Fluidkreis oder Fluidfluss des Brühfluids vorzusehen, um das Tampermittel hydraulisch zu bewegen. Zudem kann vorteilhafter Weise das Tampern innerhalb der Brüheinheit erfolgen, ohne dass eine externe, außerhalb der Brüheinheit vorgesehene Tampervorrichtung, erforderlich wird.

Weiterhin Ausdruck des Grundprinzips der vorliegenden Erfindung ist dabei der Umstand, dass keine weiteren Maßnahmen vorgesehen werden müssen oder Merkmale realisiert werden müssen, um den Zufluss von Hydraulikfluid zu dem Hydraulikzylinder zu steuern, zu begrenzen und/oder zu beenden. Denn das selbsttätige Ventil am Übergang zwischen dem Tampermittel und dem Hydraulikzylinder sorgt gerade dafür, dass das Tampermittel in Brühstellung am Getränkesubstrat zur Anlage kommt und unabhängig von der Menge des Getränkesubstrats einen konstanten oder definierten, also insbesondere reproduzierbaren, Tamperdruck auf das Getränkesubstrat aufbringt, wobei beim Erreichen des Brühdrucks das Ventil geöffnet wird, woraufhin das Brühfluid aus dem Hydraulikzylinder über das Tampermittel in die Brühkammer abfließen kann. Vorteilhaft kann die Durchfluss- und Volumensteuerung für den Brühprozess dafür sorgen, dass genügend unter Druck stehendes Brühfluid zur Durchführung des Brühprozesses nachgefördert wird, was damit die Steuerung des Hydraulikzylinders mitverursacht oder mitbewirkt. Es ist denkbar, dass das Tampermittel zumindest teilweise, insbesondere im Bereich der Anpressoberfläche, als Sieb oder Filter ausgebildet ist, um zwar einen Eintritt von Brühfluid in die Brühkammer zu ermöglichen, jedoch einen Austritt von Getränkesubstrat aus der Brühkammer in den Brühkopf zu verhindern.

Erst wenn der Überdruck im Hydraulikzylinder, beispielsweise dadurch, dass kein Brühfluid mehr durch die Brühfluidzuführung nachgeliefert wird, unter den Brühdruck abfällt, wird das selbsttätige Ventil, erneut ohne externe Steuereinflüsse, schließen und den entsprechenden Brühvorgang beenden. Im Anschluss daran muss lediglich zur Rückstellung der Tampermittel der Hydraulikzylinder entleert werden, was beispielsweise über ein Drainageventil erfolgen kann.

Mit anderen Worten ausgedrückt erreicht die Brüheinheit der vorliegenden Erfindung eine weitestgehend automatische, nur durch die Bereitstellung des Brühfluids verursachte und gesteuerte Bewegung des Tampermittels und somit eine konstante oder definierte Druckaufbringung auf das Getränkesubstrat zum Verdichten des Getränkesubstrats, insbesondere vor dem Initiieren des Brühvorgangs durch Einströmen oder Bereitstellen des Brühfluids, sowie eine gleichermaßen automatische Initiierung und Beendigung des Brühvorgangs durch die erfindungsgemäße Anordnung des selbsttätigen Ventils. Zudem bietet die erfindungsgemäße Brüheinheit den Vorteil, dass das zur Beaufschlagung des Hydraulikzylinders genutzte Brühfluid als sauberes Restwasser in den Wassertank zurückgeführt werden kann und/oder für den nächsten Brühvorgang verwendet werden kann. Aufgrund der erfindungsgemäßen Anordnung des Ventils am Übergang zwischen Tampermittel und Hydraulikzylinder entsteht eine relativ kompakte Brüheinheit, welche es ermöglicht, aufgrund der Druckregulierung mittels des selbsttätigen oder eigengesteuerten Ventils unterschiedliche Mengen an Mahlgut mit definierter Kraft in der Brühkammer zu tampern. Dadurch, dass lediglich ein Hydraulikkreislauf, welcher zudem das Brühfluid als Hydraulikfluid nutzt, erfindungsgemäß vorgesehen ist, kann eine äußerst robuste und störungsunanfällige Brüheinheit bereitgestellt werden.

Gemäß einer ersten bevorzugten Ausgestaltung der Brüheinheit kann vorgesehen sein, dass der Brühkammerboden das Gegenstück ausbildet und/oder der Brühkopf mittels einer Antriebs- oder Verstelleinrichtung zwischen unterschiedlichen Betriebspositionen verstellbar ist, wobei der Brühkopf linear in Richtung des Brühkammerbodens verstellbar ist und in Verschlussposition derart an der Brühkammer anliegt, dass die Öffnung der Brühkammer in Verschlussposition verschlossen ist. Wenn der Brühkammerboden vorteilhafterweise das Gegenstück ausbildet, kann die Brühkammer in der Art eines Siebträgers ausgestaltet sein. Es ist denkbar, dass die Brühkammer einstückig gefertigt und aus der Brüheinheit entnehmbar ist. Im Rahmen der Erfindung ist die Verschlussposition des Brühkopfes die Position, in welcher die Öffnung der Brühkammer verschlossen ist. Dahingegen ist in Ausgangsposition des Brühkopfes die Brühkammer nicht durch den Brühkopf verschlossen und die Öffnung der Brühkammer zugänglich. Um die Brühkammer in einfacher Art und Weise zu verschließen ist es vorgesehen, falls der Brühkammerboden das Gegenstück ausbildet, den gesamten Brühkopf linear in Richtung des Brühkammerbodens zu verstellen und die Öffnung der Brühkammer mit einem Bestandteil des Brühkopfes zu verschließen. Dies hat den Vorteil, dass der Weg, den das Tampermittel zur Verdichtung des Getränkesubstrats in der Brühkammer aufgrund hydraulischer Betätigung zurücklegt, deutlich verkürzt werden kann, was wiederum zur Einsparung von Bauraum und Material führt. Dabei ist es denkbar, dass das Tampermittel oder eine Infusionsbaugruppe oder ein Hauptkolben derart an der Brühkammer zur Anlage kommen, dass die Öffnung der Brühkammer verschlossen ist. Der Brühkopf ist dabei bevorzugt kraftlos linear in Richtung des Brühkammerbodens verstellbar. Dies hat den Vorteil, dass die Verstellung des Brühkopfes mit verhältnismäßig wenig Kraftaufwand und damit beispielsweise auch einfach über Handbetätigungsmittel, wie beispielsweise einen händisch bedienbaren Hebel oder dergleichen, erfolgen kann, ohne dass der Bediener viel Kraft aufbringen muss und/oder die Antriebs- oder Verstelleinrichtung als schwerfällig oder schwergängig empfindet. Insgesamt trägt es enorm zum Bedienkomfort der Brüheinheit und damit auch der Getränkezubereitungsvorrichtung bei, wenn der Verschluss der Brühkammer kraftlos oder ansatzweise kraftlos erfolgt.

Gemäß einer zweiten bevorzugten Ausgestaltung der Brüheinheit kann vorgesehen sein, dass der Brühkammerboden das Gegenstück ausbildet und die Brühkammer mittels einer Antriebs- oder Verstelleinrichtung zwischen unterschiedlichen Betriebspositionen verstellbar ist und die Brühkammer linear in Richtung des Brühkopfes verstellbar ist und in Verschlussposition derart am Brühkopf anliegt, dass die Öffnung der Brühkammer in Verschlussposition verschlossen ist. Durch diese Ausgestaltung ist es vorteilhafterweise möglich, wie beispielsweise an bekannten Kaffeevollautomaten vorgesehen, die Brühkammer in eine Beladestellung zu verschwenken, um die Brühkammer mit Getränkesubstrat zu füllen und anschließend die Brühkammer in eine Offenstellung zurück zu schwenken und anschließend durch Überführung in die Verschlussposition zu verschließen. Zum Verschließen wird gemäß dieser Ausgestaltung die Brühkammer auf den Brühkopf zubewegt, sodass der Brühkopf derart an der Brühkammer zur Anlage kommt, dass die Öffnung der Brühkammer verschlossen wird. Wiederum ist es denkbar, dass die Öffnung der Brühkammer durch den Arbeitskolben, die Infusionsbaugruppe, den Hauptkolben oder das Tampermittel des Brühkopfes verschlossen wird. Diese Ausgestaltung der erfindungsgemäßen Brüheinheit eignet sich bevorzugt zum Verdichten des Getränkesubstrats in einem Getränkevollautomat. Bevorzugt erfolgt die Druckaufbringung zum Tampern somit in eingebautem Zustand der Brüheinheit von oben, da das Tampermittel von oben auf das Gegenstück zubewegt wird. Mit anderen Worten kommt das Tampermittel bevorzugt von oben am Getränkesubstrat zur Anlage. Wiederum trägt es auch bei dieser Ausgestaltung der erfindungsgemäßen Brüheinheit enorm zum Bedienkomfort der Brüheinheit und damit auch der Getränkezubereitungsvorrichtung bei, wenn der Verschluss der Brühkammer kraftlos oder ansatzweise kraftlos erfolgt.

Gemäß einer bevorzugten Ausführungsform dieser zweiten Ausgestaltung der Erfindung kann es vorgesehen sein, dass die Brühkammer mit einer Kurbelwelleneinheit verbunden ist, wobei die Verbindung derart ausgestaltet ist, dass die Kurbelwelleneinheit je nach Rotation oder Rotationszustand eine Kippbewegung oder Linearverstellung der Brühkammer bewirkt. Beispielsweise kann vorgesehen sein, dass über die besagte Kurbelwelleneinheit und deren Rotation eine Verkippung der Brühkammer in eine Beladestellung bewirkt wird. Insbesondere nach dem Befüllen der Brühkammer mit Getränkesubstrat kann vorteilhaft vorgesehen sein, dass aus der besagten Beladestellung zunächst eine weitere oder erneute Kippbewegung der Brühkammer in eine Offenstellung durch eine Rotation der Kurbelwelleneinheit ausgelöst oder verursacht wird, bevor zum Erreichen der Verschlussposition der Brühkammer eine weiterführende Rotation der Kurbelwelleneinheit zu einer Linearverstellung der Brühkammer und des Brühkammerträgers führt. Die Führung, insbesondere der Linearverstellung der Brühkammer kann durch Gleitsteine oder vergleichbare Mittel erreicht werden, die in Kulissen geführt werden, wobei die Kulissen bevorzugt in Seitenwänden oder Gehäusewänden der Brüheinheit ausgebildet sind.

Gemäß einer dritten bevorzugten Ausgestaltung der erfindungsgemäßen Brüheinheit kann es vorgesehen sein, dass das Tampermittel den Brühkammerboden ausbildet und die Brühkammer mittels einer Antriebs- oder Verstelleinrichtung zwischen unterschiedlichen Betriebspositionen verstellbar ist und die Brühkammer linear in Richtung des Gegenstücks verstellbar ist und in Verschlussposition derart am Gegenstück anliegt, dass die Öffnung der Brühkammer in Verschlussposition verschlossen ist. Diese Ausgestaltung bezieht sich wiederum bevorzugt auf eine Brüheinheit für den Einsatz in einer Getränkezubereitungsvorrichtung, die in Form eines bekannten Kaffeevollautomaten ausgebildet ist. Vorteilhafterweise ist mit dieser Ausgestaltung der Erfindung das Verdichten des Getränkesubstrats derart möglich, dass das Tampermittel einen beweglichen Brühkammerboden ausbildet, der in Richtung des, bevorzugt feststehenden, Gegenstücks bewegbar ist, sodass zwischen Gegenstück und Tampermittel das Getränkesubstrat verdichtet werden kann. Bevorzugt erfolgt die Druckaufbringung zum Tampern somit in eingebautem Zustand der Brüheinheit von unten, da das Tampermittel als Brühkammerboden von unten auf das Gegenstück zubewegt wird. Diese Ausgestaltung bietet somit den Vorteil, dass je nach zur Verfügung stehendem Bauraum der Brühkopf an der Brühkammer, bevorzugt unterhalb der Brühkammer, angeordnet ist und die Brühkammer durch ein feststehendes Gegenstück verschlossen werden kann. Weiter bevorzugt kann es auch bei dieser dritten Ausgestaltung der Brüheinheit vorgesehen sein, dass die Brühkammer mit einer Kurbelwelleneinheit verbunden ist, wobei die Verbindung derart ausgestaltet ist, dass die Kurbelwelleneinheit je nach Rotation oder Rotationszustand eine Kippbewegung oder Linearverstellung der Brühkammer bewirkt. Da das Tampermittel den Brühkammerboden ausbildet, ist es bevorzugt vorgesehen, dass auch der Brühkopf mit der Kurbelwelleneinheit verbunden ist. Weiter kann es wiederum vorteilhaft vorgesehen sein, dass nach dem Befüllen der Brühkammer mit Getränkesubstrat in der besagten Beladestellung der Brühkammer zunächst eine weitere oder erneute Kippbewegung der Brühkammer in eine Offenstellung durch eine Rotation der Kurbelwelleneinheit ausgelöst oder verursacht wird, bevor zum Erreichen der Verschlussposition und dem Verschließen der Brühkammer eine weiterführende Rotation der Kurbelwelleneinheit zu einer Linearverstellung der Brühkammer führt. Die Führung, insbesondere der Linearverstellung der Brühkammer, kann durch Gleitsteine oder vergleichbare Mittel erreicht werden, die in Kulissen geführt werden, wobei die Kulissen bevorzugt in Seitenwänden oder Gehäusewänden der Brüheinheit ausgebildet sind. Bevorzugt erfolgt die Überführung der Brühkammer in die Verschlussposition und das Verschließen der Öffnung der Brühkammer kraftlos oder ansatzweise kraftlos, um den Bedienkomfort zu erfüllen.

Gemäß einer weiteren, besonders bevorzugten Ausführungsform kann vorgesehen sein, dass zwischen einem Brühkopfgehäuse des Brühkopfes oder einem Hauptkolben ein hydraulischer Dichtzylinder ausgebildet ist, der fluidleitend mit der Brühfluidzuführung des Brühkopfes und dem Hydraulikzylinder verbunden ist und bei einer Füllung mit Brühfluid eine lineare Bewegung des Hauptkolbens in Richtung des Gegenstücks bewirkt, wobei zwischen dem Arbeitskolben und dem Hauptkolben der Hydraulikzylinder ausgebildet ist, sodass der Arbeitskolben im Hauptkolben linear beweglich in Richtung des Gegenstücks angeordnet ist. Mit anderen Worten sind Arbeitskolben und Hauptkolben in der Art eines Teleskopkolbens ausgebildet. Besonders bevorzugt ist der Hauptkolben derart linear beweglich, dass dieser mit einer Kontaktfläche an der Brühkammer zur Anlage kommt und eine Anpresswirkung der Kontaktfläche an die Brühkammer bewirkt. Somit kann ein Verschluss der Brühkammer mittels des Hauptkolbens erreicht werden.

Dadurch kann eine weitere besonders vorteilhafte Funktionalität oder Wirkung der Brüheinheit ebenfalls durch die Versorgung der Brüheinheit mit Brühfluid im Rahmen des Brühvorgangs erreicht werden. Denn zusätzlich zu dem Hydraulikzylinder, der die Bewegung des Tampermittels steuert, und dem Ventil, das gleichermaßen die Steuerung des Hydraulikzylinders und die Infusion von Brühfluid in die Brühkammer beeinflusst, kann auch die Abdichtung oder der Verschluss der Brühkammer durch das Brühfluid unterstützt werden, indem gleichzeitig und/oder vorgelagert zu dem Einströmen von Brühfluid in den Hydraulikzylinder auch der hydraulische Dichtzylinder mit Brühfluid gefüllt wird, sodass, beispielsweise beim Füllen des Hydraulikzylinders auch der Druck im Dichtzylinder ansteigt und der sich im Dichtzylinder aufbauende Druck, bevorzugt über den beweglich im Brühkopfgehäuse gelagerten Hauptkolben dazu führt, dass die Kontaktflächen des Hauptkolbens an die Brühkammer angepresst werden, sodass vor und während des tatsächlichen Brühvorgangs die Dichtwirkung an den Kontaktflächen zwischen Brühkammer und Hauptkolben verbessert und sichergestellt wird.

Gemäß einer bevorzugten Ausführungsform kann es weiter vorgesehen sein, dass der Hauptkolben in Brühposition bis zu einem Anschlag der Brühkammer auf die Brühkammer zubewegt ist, sodass die Brühkammer bei Anlage des Hauptkolbens am Anschlag verschlossen ist. Im Rahmen der Erfindung ist die Brühposition des Hauptkolbens die Position, in der der Hauptkolben an der Brühkammer zur Anlage kommt. Dadurch dass die Brühkammer einen Anschlag aufweist oder umfasst, ist die Bewegung des Hauptkolbens begrenzt und der Hauptkolben kommt an einer definierten Stelle an der Brühkammer zur Anlage, wodurch vorteilhafterweise die Stellung des Hauptkolbens gegenüber der Brühkammer in Brühposition des Hauptkolbens festgelegt werden kann. Dadurch wird es vorteilhaft ermöglicht, dass beim Einströmen von Brühfluid in den Hydraulikzylinder und den Dichtzylinder der Hauptkolben durch die Füllung des Dichtzylinder bewegt oder angetrieben wird, und zwar bis dieser am Anschlag der Brühkammer zur Anlage kommt und somit die Brühposition des Hauptkolbens erreicht ist. In der Folge kann durch weiteres Einströmen von Brühfluid in den Hydraulikzylinder und den Dichtzylinder im Hydraulikzylinder und dem Dichtzylinder ein Überdruck aufgebaut werden, der schließlich zur Öffnung des Ventils und damit zur Freigabe des Fluidkanals oder der Fluidverbindung zwischen dem Hydraulikzylinder und dem Tampermittel und damit schließlich zum Einleiten des Brühfluids in die Brühkammer führt. Das Vorsehen eines, bevorzugt mechanischen, Anschlags auf Seiten der Brühkammer, bietet damit die Möglichkeit zu einem reproduzierbaren Brühprozess, verglichen mit einer Ausführung, in der kein definierter Anschlag an der Brühkammer vorgesehen ist. Die Anlage des Hauptkolbens am Anschlag der Brühkammer bietet des Weiteren in vorteilhafter Weise die Möglichkeit, dass ganz gezielt in der Zeitspanne, in der auch innerhalb der Brühkammer ein Druck oder Überdruck aufgebaut wird, bis schließlich der Brühdruck erreicht ist, der Kontaktbereich zwischen Hauptkolben und Brühkammer zusätzlich kraftbeaufschlagt werden kann, so dass die Abdichtung der Brühkammer unterstützt oder befördert wird. Dies erlaubt einen langfristig sicheren und dichten Betrieb der Brühkammer, da sichergestellt ist, dass zeitweise immer gerade dann, wenn im Inneren der geschlossenen Brühkammer ein Druck aufgebaut wird oder kurz bevor ein entsprechender Druck aufgebaut wird eine zusätzliche zeitweise Kraft auf den Anschlag der Brühkammer bzw. den Kontaktbereich zwischen Hauptkolben und Brühkammer ausgeübt wird, sodass die Brühkammer zuverlässig verschlossen ist. Bevorzugt weist der Hauptkolben im Bereich der Kontaktfläche, mit der der Hauptkolben am Anschlag der Brühkammer zur Anlage gebracht wird, eine Dichtung auf.

Um den Arbeitskolben in einfacher Art und Weise von einer Brühposition in eine Ausgangsposition zu bewegen, hat es sich als vorteilhaft erwiesen, dass der Arbeitskolben mit zumindest einem Arbeitskolbenrückstellelement derart zusammenwirkt, dass der Arbeitskolben wenn der auf den Arbeitskolben wirkende Überdruck, bevorzugt im Hydraulikzylinder, reduziert oder aufgehoben wird, von einer Brühposition in eine Ausgangsposition bewegt wird. Im Rahmen der Erfindung ist die Brühposition des Arbeitskolbens die Position, in welcher das mit dem Arbeitskolben verbundene Tampermittel mittels des Arbeitskolbens zumindest teilweise in die Brühkammer eingeführt ist und über den Arbeitskolben und das Tampermittel ein Tamperdruck auf das Getränkesubstrat aufgebracht wird. In Ausgangsposition hingegen wird mittels des Arbeitskolbens kein Druck auf das Getränkesubstrat aufgebracht. Das Arbeitskolbenrückstellelement ist derart am Arbeitskolben angeordnet, dass eine Erhöhung des Innendrucks im Hydraulikzylinder dazu führt, dass der Arbeitskolben zunächst gegen die Rückstellkraft des Arbeitskolbenrückstellelements in die Brühkammer hinein verschoben wird. Sobald der Druck im Hydraulikzylinder nicht mehr gehalten werden kann oder überschritten wird, beispielsweise dadurch, dass kein Brühfluid mehr nachgefördert wird, und der Hydraulikzylinder und/oder der Dichtzylinder geleert werden, wird der Arbeitskolben aus der Brühposition zurück in die Ausgangsposition überführt, in dem das Arbeitskolbenrückstellelement den Arbeitskolben vom Getränkesubstrat wegbewegt. Bevorzugt ist das Arbeitskolbenückstellelement in der Art einer Feder ausgebildet.

Entsprechend ist es denkbar, dass auch der Hauptkolben vorteilhafterweise mit zumindest einem Hauptkolbenrückstellelement zusammenwirkt, das den Hauptkolben von einer Brühposition in eine Ausgangsposition bewegt, wenn der auf den Hauptkolben wirkende Überdruck reduziert oder aufgehoben wird. Wie bereits voranstehend erläutert, kommt der Hauptkolben in Brühposition an der Brühkammer zur Anlage. Das heißt, dass bei Aufbau eines ausreichenden Drucks im Dichtzylinder der Hauptkolben in die Brühposition überführt wird und bei Abfall des Brühdrucks im Hydraulikzylinder und der Hauptkolben in eine von der Brühkammer beabstandete Ausgangsposition bewegt wird, in dem das Hauptkolbenrückstellelement den Hauptkolben aufgrund der Rückstellkraft des Hauptkolbenrückstellelements zurückbewegt. Bevorzugt ist das Hauptkolbenückstellelement in der Art einer Feder ausgebildet.

Weiterhin hat sich als vorteilhaft erwiesen, wenn im Hydraulikzylinder zwischen Arbeitskolben und Brühfluidzuführung eine mit Brühfluid beaufschlagbare hydraulische Arretiereinrichtung mit zumindest einem innerhalb der Arretiereinrichtung beweglich angeordneten Klemmmittel vorgesehen ist, wobei die Arretiereinrichtung brühfluidleitend mit der Brühfluidzuführung verbunden ist und am Arbeitskolben zur Anlage kommt, wobei ein Füllen der Arretiereinrichtung mit Brühfluid eine Bewegung des Klemmmittels in Richtung einer Wandung des Brühkopfes, insbesondere einer Wandung des Hauptkolbens und/oder einer Wandung eines Brühkopfgehäuses, bewirkt, so dass das Klemmmittel klemmend an der Wandung zur Anlage kommt und eine Arretierung des Arbeitskolbens gegen eine Bewegung in vom Getränkesubstrat wegweisender Richtung bewirkt. Vorteilhafterweise ist die Arretiereinrichtung brühfluidleitend mit der Brühfluidzuführung verbunden und kommt zur Arretierung des Arbeitskolbens am Arbeitskolben zur Anlage. Bevorzugt kommt die Arretiereinrichtung in eingebautem Zustand oberhalb des Arbeitskolbens am Arbeitskolben zur Anlage. Die Arretierung des Arbeitskolbens, so dass insbesondere eine Bewegung des Arbeitskolbens während des Brühvorgangs weg vom Getränkesubstrat blockiert wird, erfolgt, indem durch Füllen der Arretiereinrichtung mit Brühfluid eine Bewegung des Klemmmittels in Richtung einer Wandung des Brühkopfes, insbesondere einer Wandung des Hauptkolbens und/oder einer Wandung des Brühkopfgehäuses bewirkt wird, sodass das Klemmmittel klemmend an einer Wandung zur Anlage kommt und den Arbeitskolben arretiert. Mit anderen Worten kommt das Klemmmittel reibschlüssig an einer Wandung des Brühkopfes zur Anlage, da das Klemmmittel durch das Brühfluid kraftbeaufschlagt an eine Wandung des Brühkopfes angepresst wird. Durch die, bevorzugt flächige, Anlage der Arretiereinrichtung am Arbeitskolben und die reibschlüssige Ineingriffnahme der Klemmmittel am Hauptkolben der Brühkopfgehäuse, erfolgt eine zuverlässige Arretierung des Arbeitskolbens und der mit dem Arbeitskolben verbundenen Bestandteile des Brühkopfes, beispielsweise einer Infusionsbaugruppe und/oder des Tampermittels, in Brühposition. Somit kann eine weitere besonders vorteilhafte Funktionalität oder Wirkung der Brüheinheit ebenfalls durch die Versorgung der Brüheinheit mit Brühfluid im Rahmen des Brühvorgangs erreicht werden. Denn zusätzlich zu dem Hydraulikzylinder und/oder dem Dichtzylinder kann auch die Arretierung des Arbeitskolbens und der mit dem Arbeitskolben gekoppelten Bestandteile des Brühkopfes mit Hilfe des Brühfluids erfolgen, indem gleichzeitig und/oder vorgelagert zu dem Einströmen von Brühfluid in den Dichtzylinder und/oder Hydraulikzylinder nicht nur der Druck im Hydraulikzylinder und/oder im Dichtzylinder, sondern auch in der Arretiereinrichtung ein Druck aufgebaut wird, der dazu führt, dass ein Klemmmittel in Richtung einer Wandung des Brühkopfes, bevorzugt des Hauptkolbens oder des Brühkopfgehäuses, bewegt wird und an der Wandung reibschlüssig zur Anlage kommt. Dieses Anpressen der Klemmmittel an eine Wandung des Brühkopfes bewirkt, dass vor und/oder während des Brühvorgangs die Arretierung des Arbeitskolbens in der Brühposition verbessert oder sichergestellt wird. Bevorzugt weist die Arretiereinrichtung einen zum Innendurchmesser des Hydraulikzylinders oder des Dichtzylinders komplementären Außendurchmesser auf. Die Arretiereinrichtung ist dazu ausgebildet, die Klemmmittel umfänglich, vorzugsweise vollumfänglich, an einer Wandung des Hauptkolbens und/oder einer Wandung des Brühkopfgehäuses klemmend zur Anlage zu bringen. Mittels einer umfänglichen Klemmung der Klemmmittel ist eine große Kontaktfläche zur reibschlüssigen Festlegung der Klemmmittel nutzbar. Folglich sind besonders große Klemmkräfte realisierbar.

Eine weitere besonders vorteilhafte Ausbildung der Brüheinheit kann vorsehen, dass der Arbeitskolben, das Tampermittel und/oder eine Infusionsbaugruppe, die das Ventil aufweist, eine mit Brühfluid beaufschlagbare Tamperdichtung aufweist, die zumindest in Brühposition des Arbeitskolbens an der Brühkammer zur Anlage kommt, wobei die Beaufschlagung der Tamperdichtung mit einem Fluid eine Ausdehnung der Tamperdichtung bewirkt und die Tamperdichtung zumindest in Brühposition derart ausgedehnt ist, dass die Brühkammer abgedichtet ist. Mittels der Tamperdichtung kann ganz gezielt vor und während des Brühprozesses in der Zeit oder in der Zeitspanne, in der innerhalb der Brühkammer ein Druck oder Überdruck aufgebaut wird oder herrscht, die Brühkammer durch Beaufschlagung der Tamperdichtung mit Fluid abgedichtet werden. Vorteilhafterweise kann diese Abdichtung unabhängig von Fertigungstoleranzen der beteiligten Bauteile erfolgen, da eine Ausdehnung der Tamperdichtung durch die Fluidbeaufschlagung bewirkt wird. Somit dehnt sich die Tamperdichtung in dem ihr zur Verfügung stehenden Raum oder Spalt aus und schließt diesen zur Erzielung einer Dichtwirkung unabhängig von Fertigungstoleranzen der abzudichtenden Bauteile. Nach Beendigung des Brühvorgangs und bei Druckabfall in der Brühkammer sowie im Hydraulikzylinder ist es vorgesehen, dass auch der Druck in der Tamperdichtung abfällt, sodass eine Entspannung der Tamperdichtung erfolgt und die Abdichtung der Brühkammer aufgehoben wird. Das führt vorteilhafterweise dazu, dass der Arbeitskolben nach Beendigung des Brühvorgangs ohne besonderen Kraftaufwand in eine Ausgangsposition zurückbewegt werden kann. Bevorzugt ist die Tamperdichtung als Radialdichtung ausgebildet und kommt innerhalb der Brühkammer am Brühkammermantel zur Anlage, um ein Austreten von Brühfluid zu verhindern. Es ist dabei denkbar, dass die Tamperdichtung allein die Brühkammer abdichtet. Jedoch ist es auch denkbar, dass die Brühkammer sowohl mittels der Tamperdichtung als auch mittels einer am Hauptkolben angeordneten weiteren Dichtung zusätzlich abgedichtet ist. Besonders bevorzugt wird die Tamperdichtung mit Brühfluid beaufschlagt, um das sowieso unter Druck zur Verfügung stehende oder zur Verfügung gestellte Brühfluid zu nutzen, um in der Zeitspanne, in der auch innerhalb der Brühkammer sich ein Druck oder Überdruck einstellt die Brühkammer zeitweise abzudichten.

In einer weiteren besonders bevorzugten Ausführungsform ist vorgesehen, dass das Ventil die Beaufschlagung des Hauptkolbens und/oder der Arretiereinrichtung und/oder der Tamperdichtung mit Brühfluid reguliert.

Dies ermöglicht in besonders vorteilhafter Weise eine einfache und effektive Steuerung sowohl des am Hauptkolben und/oder der Arretiereinrichtung und/oder der Tamperdichtung als auch des Arbeitskolbens durch das selbsttätige Ventil zwischen Tampermittel und Hydraulikzylinder. Bevorzugt folgt die Regulierung der Beaufschlagung des Hauptkolbens und des Arbeitskolbens durch ein gemeinsames selbsttätiges zwischen Tampermittel und Hydraulikzylinder angeordnetes Ventil. Dies ermöglicht in besonders vorteilhafterweise eine einfache und effektive Steuerung sowohl der Füllung des Hydraulikzylinders mit Brühfluid als auch des Dichtzylinders. Weiter kann es vorgesehen sein, dass die Fluidverbindung oder die fluidleitende Verbindung zwischen Dichtzylinder und Hydraulikzylinder uneingeschränkt oder ungesteuert, beispielsweise in Form einer einfachen Durchflussöffnung, ausgebildet ist. Die entsprechenden Drücke und Kräfte werden dann im Wesentlichen durch die Flächenverhältnisse und/oder Volumenverhältnisse zwischen Dichtzylinder und Hydraulikzylinder eingestellt oder gesteuert. Sofern die Brüheinheit eine hydraulische Arretiereinrichtung und einen Hauptkolben aufweist, hat es sich als vorteilhaft erwiesen, wenn die Beaufschlagung des Hauptkolbens, der Arretiereinrichtung und des Arbeitskolbens mittels eines gemeinsamen Ventils reguliert wird. Des Weiteren ist es denkbar, dass, sofern die Brüheinheit eine Tamperdichtung und einen Hauptkolben aufweist, die Beaufschlagung des Hauptkolbens, der Tamperdichtung und des Arbeitskolbens mit Brühfluid mittels eines gemeinsamen Ventils reguliert wird. Am meisten bevorzugt reguliert das Ventil sowohl die Beaufschlagung des Hauptkolbens, der Arretiereinrichtung, der Tamperdichtung und des Arbeitskolbens mit Brühfluid.

Die oben genannte Aufgabe wird weiterhin gelöst durch eine Getränkezubereitungsvorrichtung, insbesondere eine Kaffee- und/oder Espressomaschine, aufweisend einen Wassertank, eine Durchflussmesseinheit, eine Pumpeinheit und eine Heizeinheit sowie eine Brüheinheit gemäß einer der vorangehend genannten Ausführungen.

Um eine möglichst einfache Art der Getränkezubereitung zu ermöglichen, hat es sich als vorteilhaft erwiesen, wenn die Getränkezubereitungsvorrichtung eine Mahleinheit aufweist. Die Mahleinheit ist bevorzugt innerhalb oder an der Getränkezubereitungsvorrichtung derart angeordnet, dass das in der Mahleinheit gemahlene Getränkesubstrat direkt, bevorzugt aufgrund der Schwerkraft, in die Brühkammer gefördert wird. Dabei ist es denkbar, dass die Brühkammer zum Einführen von Getränkesubstrat in die Brühkammer aus der Brüheinheit entnommen wird und nach dem Befüllen mit Getränkesubstrat wieder in die Brüheinheit eingesetzt wird, wie es beispielsweise bei bekannten Siebträgermaschinen der Fall ist. Ebenso ist es jedoch denkbar, dass die Brühkammer nicht aus der Brüheinheit entnommen wird, sondern lediglich in eine Beladestellung verschwenkt wird, in welcher die Brühkammer derart an der Mahleinheit angeordnet ist, dass diese auf einfacher Art und Weise mit dem Getränkesubstrat befüllt werden kann.

Ferner wird die oben genannte Aufgabe gelöst durch ein Verfahren, insbesondere ein Verfahren zum Durchführen eines Brühvorgangs und zum Betrieb einer Brüheinheit für eine Getränkezubereitungsvorrichtung, insbesondere eine Kaffee- und/oder Espressomaschine, umfassend eine Brühkammer, die zur Aufnahme eines Getränkesubstrats, insbesondere gemahlenem Kaffeepulver, über eine Öffnung der Brühkammer eingerichtet ist und einen, bevorzugt der Brühkammer gegenüberliegenden, Brühkammerboden und einen an dem Brühkammerboden angrenzenden bevorzugt zylindrischen, insbesondere die Öffnung begrenzenden, Brühkammermantel aufweist, wobei die Brühkammer in einer Beladestellung mit Getränkesubstrat beladen wird. Dabei kann, wie voranstehend bereits angedeutet, die Brühkammer in Beladestellung auch außerhalb der Brüheinheit positioniert sein oder die Brühkammer in eine Beladestellung innerhalb der Brüheinheit verschwenkt werden.

Nach Beladung der Brühkammer folgt ein Überführen der Brühkammer in eine Offenstellung der Brühkammer, wobei das Überführen der Brühkammer in die Offenstellung durch Einsetzen der Brühkammer, wie es beispielsweise bei Siebträgermaschinen vorgesehen ist, in die Brüheinheit oder durch Verschwenken der Brühkammer innerhalb der Brüheinheit, wie es beispielsweise bei Kaffeevollautomaten vorgesehen sein kann, erfolgt. Die Brühkammer kann bevorzugt mittels einer Antriebs- oder Verstelleinrichtung von einer Beladestellung in eine Offenstellung überführt werden. Im Rahmen der Erfindung ist in Offenstellung der Brühkammer die Brühkammer nicht verschlossen. Bevorzugt sind in Offenstellung das Gegenstück und das Tampermittel derart zueinander ausgerichtet, dass sie mittels einer Linearbewegung aufeinander zu bewegbar sind und die Rotationsachsen von Gegenstück und Tampermittel zusammenfallen.

Nach Beladung und Überführung in die Offenstellung der Brühkammer erfolgt das Verdichten des Getränkesubstrats in der Brühkammer mittels eines Tampermittels, wobei durch Bewegen des Tampermittels in der Brühkammer in Richtung des Gegenstücks eine Anpressoberfläche des Tampermittels mit dem Getränkesubstrat in Kontakt gebracht und ein definierter Tamper-Druck auf das Getränkesubstrat aufgebracht wird.

Erfindungsgemäß sieht das Verfahren vor, dass zum Verdichten des Getränkesubstrats ein Hydraulikzylinder des Brühkopfes mit Brühfluid gefüllt wird, wobei das Tampermittel brühfluidleitend mit einer Brühfluidzuführung verbunden ist und der Hydraulikzylinder ebenfalls brühfluidleitend mit der Brühfluidzuführung verbunden ist. Der Arbeitskolben des Hydraulikzylinders ist dabei so mit dem Tampermittel verbunden, dass ein Füllen des Hydraulikzylinders mit Brühfluid eine Bewegung des Tampermittels in Richtung des Gegenstücks bewirkt und mittels des Tampermittels über die Anpressoberfläche ein Tamper-Druck auf das Getränkesubstrat aufgebracht wird. Da der Hydraulikzylinder fluidleitend zwischen der Brühfluidzuführung und dem Tampermittel angeordnet ist und ein selbsttätiges oder eigengesteuertes Ventil am Übergang zwischen dem Tampermittel und dem Hydraulikzylinder angeordnet ist, welches erst bei Erreichen eines Brühdrucks im Hydraulikzylinder die Fluidverbindung zwischen Hydraulikzylinder und Tampermittel freigibt, wird im Vorfeld der Zuführung des Brühfluids zum Tampermittel und somit in die Brühkammer ein konstanter Druck im Hydraulikzylinder aufgebaut, welcher über die Anpressoberfläche des Tampermittels auf das Getränkesubstrat übertragen wird und dieses unabhängig von der Menge an Getränkesubstrat in der Brühkammer anforderungsgemäß verdichtet. Das Verfahren ist ferner dadurch gekennzeichnet, dass der Abfluss des Brühfluids in die Brühkammer mittels des Ventils reguliert wird und das Ventil derart dimensioniert und ausgestaltet ist, dass wie voranstehend erläutert, unabhängig von der Menge des Getränkesubstrats in der Brühkammer ein konstanter oder voreingestellter Tamper-Druck auf das Getränkesubstrat aufgebracht werden kann.

Bei Erreichen eines Brühdrucks in dem Hydraulikzylinder kann eine verschließbare Fluidverbindung zwischen dem Hydraulikzylinder und dem Tampermittel freigegeben werden, sodass im geöffneten Zustand des Ventils das Brühfluid aus dem Hydraulikzylinder in die Brühkammer fließen kann, wobei das Brühfluid über einen durchgängigen Fluidkanal, der die Brühfluidzuführung mit zumindest einer Brühfluidauslassöffnung des Brühkopfes, die bevorzugt dem Tampermittel angeordnet ist, fluidleitend verbindet, in die Brühkammer eingeführt wird. Durch die Verbindung von Brühfluidzuführung über den Hydraulikzylinder und den Fluidkanal mit der Fluidauslassöffnung und der Regulierung des Abflusses des Brühfluids mittels des selbsttätigen Ventils ist es auf einfache Art und Weise möglich, das Einführen von Brühfluid in die Brühkammer zum Aufbrühen des Getränkesubstrats bei Erreichen eines ausreichenden Brühdrucks auszulösen und gleichzeitig mittels des Brühdrucks den Arbeitskolben sowie das Tampermittel sicher während des Aufbrühens des Getränkesubstrats in Brühposition zu halten.

Die besondere erfindungsgemäße Leistung des Verfahrens besteht also darin, dass wie oben bereits angedeutet, das Brühfluid über die Brühfluidzuführung zunächst den Hydraulikzylinder füllt, wodurch der Arbeitskolben und somit auch das am Arbeitskolben angeordnete Tampermittel auf das Gegenstück zubewegt werden und so eine Verdichtung des Getränkesubstrats in der Brühkammer bewirkt wird. Weiter kann das Brühfluid vom Hydraulikzylinder aus über das selbsttätige oder eigengesteuerte Ventil in die Brühkammer gelangen, sodass zur Steuerung der Bewegung des Tampermittels oder Initiierung des Aufbrühens des Getränkesubstrats lediglich das Brühfluid in einer gewünschten Weise, also bevorzugt mit einer gewünschten Flussrate und einem gewünschten Überdruck zur Verfügung gestellt werden muss.

Grundsätzlich soll zur Vermeidung unnötiger Wiederholungen im Hinblick auf die Merkmale, Eigenschaften und Vorteile des erfindungsgemäßen Verfahrens auf die obige Offenbarung der Brüheinheit Bezug genommen werden. Dies bedeutet, dass grundsätzlich verfahrensmäßig offenbarte und beschriebene Merkmale als vorrichtungsmäßig beschrieben und beanspruchbar gelten sollen, und umgekehrt.

Gemäß einer besonders bevorzugten Ausführung des Verfahrens kann es vorgesehen sein, dass die Brühkammer vor Freigabe der verschließbaren Fluidverbindung zwischen der Brühfluidzuführung mit einer Brühfluidauslassöffnung verschlossen wird. Zum Verschließen der Brühkammer wird die Brühkammer auf ein Gegenstück oder der Brühkopf auf die Brühkammer, bevorzugt kraftlos, zubewegt und das Verschließen der Brühkammer wird durch den Brühkopf oder das Gegenstück bewirkt. Somit kann der Weg, den der Arbeitskolben und das Tampermittel zur Verdichtung des Getränkesubstrats bewegt werden müssen, reduziert werden, da durch die Bewegung von Gegenstück oder Brühkopf auf die Brühkammer zu, die Entfernung zwischen Getränkesubstrat und Tampermittel oder zwischen Getränkesubstrat und Gegenstück reduziert werden kann. Bevorzugt erfolgt das Verschließen der Brühkammer vor Befüllung des Hydraulikzylinders mit Brühfluid. Zudem trägt die bevorzugte Form des kraftlosen Verschließens der Brühkammer wesentlich zur Erhöhung des Bedienkomforts bei.

Gemäß einer weiteren vorteilhaften Weiterbildung des Verfahrens kann vorgesehen sein, dass die Öffnung der Brühkammer vor Freigabe der verschließbaren Fluidverbindung zwischen der Brühfluidzuführung und einer Brühfluidauslassöffnung verschlossen wird. Die Brühkammer wird durch das zumindest teilweise Einführen des Arbeitskolbens, des Tampermittels, der Infusionsbaugruppe und/oder des Gegenstücks in die Brühkammer verschlossen. Bevorzugt wird die Öffnung der Brühkammer, falls das Tampermittel den Brühkammerboden ausbildet, durch zumindest teilweises Einführen des Gegenstücks in die Brühkammer verschlossen. Falls der Brühkammerboden das Gegenstück ausbildet, ist es weiter bevorzugt vorgesehen, dass zum Verschluss der Brühkammer der Arbeitskolben, das Tampermittel oder die Infusionsbaugruppe in die Brühkammer, insbesondere durch die Öffnung der Brühkammer, teilweise eingeführt wird. Noch mehr bevorzugt erfolgt das Verschließen der Brühkammer vor Befüllung des Hydraulikzylinders mit Brühfluid.

In einer weiteren vorteilhaften Ausgestaltung des Verfahrens kann es vorgesehen sein, dass der Hydraulikzylinder zwischen dem Arbeitskolben und einem Hauptkolben ausgebildet ist und zwischen Brühkopfgehäuse und dem Hauptkolben ein zusätzlicher hydraulischer Zylinder, nämlich ein hydraulischer Dichtzylinder, ausgebildet ist, der fluidleitend mit der Brühfluidzuführung des Brühkopfes und dem Hydraulikzylinder verbunden ist und beim Verschließen der Brühkammer und/oder beim Verdichten des Getränkesubstrats mit Brühfluid gefüllt wird, sodass eine lineare Bewegung des Hauptkolbens in Richtung des Gegenstücks bewirkt wird. Somit kann beispielsweise der Hauptkolben dazu genutzt werden, die Brühkammer zusätzlich abzudichten, indem der Hauptkolben in Folge der linearen Bewegung des Hauptkolbens in Richtung des Gegenstücks an einem Anschlag der Brühkammer zur Anlage gebracht wird. Bevorzugt weist der Hauptkolben im Bereich der Kontaktfläche, mit der er an der Brühkammer zur Anlage gebracht wird, eine Dichtung auf.

Weiterhin kann vorteilhaft vorgesehen sein, dass der Arbeitskolben mittels zumindest einem Arbeitskolbenrückstellelement von einer Brühposition in eine Ausgangsposition bewegt wird, wenn der auf den Arbeitskolben wirkende Überdruck reduziert oder aufgehoben wird. Dies führt vorteilhafterweise dazu, dass nach Abschuss des Brühvorgangs ohne Einwirken des Bedieners der Arbeitskolben in eine Ausgangsposition zurückbewegt werden kann und eine neue Befüllung oder Reinigung der Brühkammer ermöglicht wird.

Ebenfalls kann vorteilhaft vorgesehen sein, dass der Hauptkolben mittels zumindest einem Hauptkolbenrückstellelement von einer Brühposition in eine Ausgangsposition bewegt wird, wenn der auf den Hauptkolben wirkende Überdruck reduziert oder aufgehoben wird.

Weiterhin kann vorteilhaft vorgesehen sein, dass eine am Arbeitskolben, am Tampermittel und/oder an der Infusionsbaugruppe mit Brühfluid beaufschlagbare Tamperdichtung zur Abdichtung der Brühkammer an der Brühkammer zur Anlage gebracht wird, wobei die Tamperdichtung durch Beaufschlagung mit einem Brühfluid ausgedehnt werden kann und die Ausdehnung der Tamperdichtung eine Abdichtung der Brühkammer bewirkt. Dabei wird das sowieso vorhandene und unter Druck stehende Brühfluid genutzt, um die Tamperdichtung mit Brühfluid zu füllen und dadurch eine Ausdehnung der Tamperdichtung und eine Abdichtung der Brühkammer zu bewirken. Bevorzugt ist die mit Brühfluid füllbare Tamperdichtung am Außenumfang des Arbeitskolbens, des Tampermittels oder der Infusionsbaugruppe angeordnet und kommt weiter bevorzugt zur Abdichtung der Brühkammer am Brühkammermantel zur Anlage. Dabei wird die Tamperdichtung derart mit Brühfluid beaufschlagt und ausgedehnt, dass der zwischen Brühkammermantel und Arbeitskolben, und/oder zwischen Brühkammermantel und Tampermittel und/oder zwischen Brühkammermantel und Infusionsbaugruppe bestehende Spalt verschlossen wird.

Gemäß einer weiteren vorteilhaften Weiterbildung des Verfahrens kann vorgesehen sein, dass der Tamperkolben mittels einer hydraulischen Arretiereinrichtung hydraulisch arretiert wird, wobei die hydraulische Arretiereinrichtung, die zumindest ein innerhalb der Arretiereinrichtung bewegliches Klemmmittel aufweist, mit Brühfluid gefüllt wird, wodurch eine Bewegung des Klemmmittels in Richtung einer Wandung des Brühkopfes, insbesondere einer Wandung des Hauptkolbens und/oder einer Wandung eines Brühkopfgehäuses, bewirkt wird, so dass das zumindest eine Klemmmittel klemmend an der Wandung zur Anlage kommt und eine Arretierung des Arbeitskolbens gegen eine Bewegung in vom Getränkesubstrat wegweisender Richtung bewirkt, wobei die Arretiereinrichtung im Hydraulikzylinder zwischen Arbeitskolben und Brühfluidzuführung angeordnet ist und die Arretiereinrichtung brühfluidleitend mit der Brühfluidzuführung Da die Arretiereinrichtung im Hydraulikzylinder zwischen Arbeitskolben und Brühfluidzuführung angeordnet und brühfluidleitend mit der Brühfluidzuführung verbunden ist und am Arbeitskolben zur Anlage kommt, kann als Hydraulikfluid für die Arretiereinrichtung vorteilhafterweise das Brühfluid genutzt werden. Zur Verhinderung einer Bewegung des Arbeitskolbens in vom Getränkesubstrat wegweisender Richtung werden einerseits die Klemmmittel an eine Wandung des Brühkopfes angepresst und andererseits kommt die Arretiereinrichtung am Arbeitskolben zur Anlage, sodass über den Reibschluss zwischen Klemmmittel und Brühkopf eine unerwünschte Bewegung des Arbeitskolbens innerhalb der Brühkammer verhindert werden kann. Bevorzugt kommt das Klemmmittel an einer Wandung des Hauptkolbens und/oder einer Wandung des Brühkopfgehäuses zur Anlage.

Um einen möglichst einfachen Betrieb der Brüheinheit zu gewährleisten hat es sich als vorteilhaft erwiesen, wenn die Beaufschlagung des Hauptkolbens und/oder der Arretiereinrichtung und/oder der Tamperdichtung mit Brühfluid mittels eines Ventils reguliert wird. Dies heißt mit anderen Worten, dass der Druckaufbau im Hydraulikzylinder des Arbeitskolbens, im Dichtzylinder des Hauptkolbens, in der Arretiereinrichtung und der Tamperdichtung durch ein gemeinsames Ventil reguliert werden kann, sodass in den besagten Bestandteilen der Brüheinheit ein im Wesentlichen gleicher Druck aufgebaut wird und bei Erreichen des erforderlichen Brühdrucks und Öffnen des gemeinsamen Ventils eine ausreichende Druckbeaufschlagung der genannten Bauteile gewährleistet ist. Damit sind vorteilhafterweise weder weitere Hydraulikkreisläufe vorzusehen und zu bedienen, noch andere Arten der Arretierung, beispielsweise mechanische Arretierungen, oder der Abdichtung in der Brüheinheit vorzusehen.

Weiterhin kann vorteilhaft vorgesehen sein, dass der Druck im Hydraulikzylinder und/oder Dichtzylinder während des gesamten Brühvorgangs im Wesentlichen konstant gehalten wird, bevorzugt dadurch, dass während des Brühvorgangs ab dem Erreichen des Brühdrucks im Hydraulikzylinder Brühfluid, insbesondere unter Druck stehendes Brühfluid, über die Brühfluidzuführung nachgeliefert wird und damit aus dem Hydraulikzylinder und/oder Dichtzylinder abfließendes Brühfluid kompensiert oder sogar überkompensiert wird. Zudem ist es denkbar, dass beim Vorhandensein einer hydraulischen Arretiereinrichtung in der Brüheinheit der Druck im Hydraulikzylinder und/oder Dichtzylinder und/oder der Arretiereinrichtung während des gesamten Brühvorgangs im Wesentlichen konstant oder vordefiniert gehalten wird. Gleiches gilt beim Vorhandensein einer hydraulischen Tamperdichtung, wobei es hier denkbar ist, dass der Druck im Hydraulikzylinder und/oder Dichtzylinder und/oder der Tamperdichtung während des gesamten Brühvorgangs im Wesentlichen konstant gehalten wird. Besonders bevorzugt wird der Druck im Hydraulikzylinder, Dichtzylinder, der Arretiereinrichtung und der Tamperdichtung während des gesamten Brühvorgangs im Wesentlichen konstant gehalten.

Alternativ kann auch vorgesehen sein, dass der Druck, insbesondere nach dem Öffnen des Ventils, das den Tamperdruck vorgibt, variiert wird, solange der Druck überschritten bleibt, der zum Öffnen des Ventils notwendig ist. Dies kann zur Optimierung des Brühprofils vorgesehen werden. Es ist auch denkbar, dass der Druck während des Brühens unter den Öffnungsdruck des Ventils abgesenkt wird. In diesem Fall wäre aber sicherzustellen, dass zumindest zeitweise das Ventil in einer zwangsgeöffneten Stellung gehalten wird. um den Brühvorgang durch den Druckabfall und ein automatischen Schließen des Ventils nicht zu beenden.

Vorteilhafte Ausführen, Beispiele und Aspekte der vorliegenden Erfindung werden nachfolgend anhand der schematischen, lediglich beispielhaften Zeichnungen erläutert.

Darin zeigen:
- Fig. 1:: einen Schnitt durch eine erste Ausführungsform einer erfindungsgemäßen Brüheinheit in einer Offenstellung der Brühkammer und einer Ausgangsposition des Arbeitskolbens;
- Fig. 2:: einen Schnitt durch eine erste Ausführungsform einer erfindungsgemäßen Brüheinheit gemäß Fig. 1 in einer Verschlussposition der Brühkammer und einer Brühposition des Arbeitskolbens;
- Fig. 3:: einen Schnitt durch eine zweite Ausführungsform einer erfindungsgemäßen Brüheinheit in einer Offenstellung der Brühkammer und einer Ausgangsposition des Arbeitskolbens;
- Fig. 4:: einen Schnitt durch die zweite Ausführungsform der erfindungsgemäßen Brüheinheit gemäß Fig. 3 in einer Verschlussposition der Brühkammer und einer Brühposition des Arbeitskolbens;
- Fig. 5:: einen Schnitt durch eine dritte Ausführungsform einer erfindungsgemäßen Brüheinheit in einer Offenstellung der Brühkammer und einer Ausgangsposition des Arbeitskolbens;
- Fig. 6:: einen Schnitt durch die dritte Ausführungsform der erfindungsgemäßen Brüheinheit gemäß Fig. 5 in einer Verschlussposition der Brühkammer und einer Brühposition des Arbeitskolbens;
- Fig. 7:: einen Schnitt durch eine vierte Ausführungsform einer erfindungsgemäßen Brüheinheit in einer Offenstellung der Brühkammer und einer Ausgangsposition des Arbeitskolbens;
- Fig. 8:: einen Schnitt durch die vierte Ausführungsform der erfindungsgemäßen Brüheinheit gemäß Fig. 7 in einer Verschlussposition der Brühkammer und einer Brühposition des Arbeitskolbens.

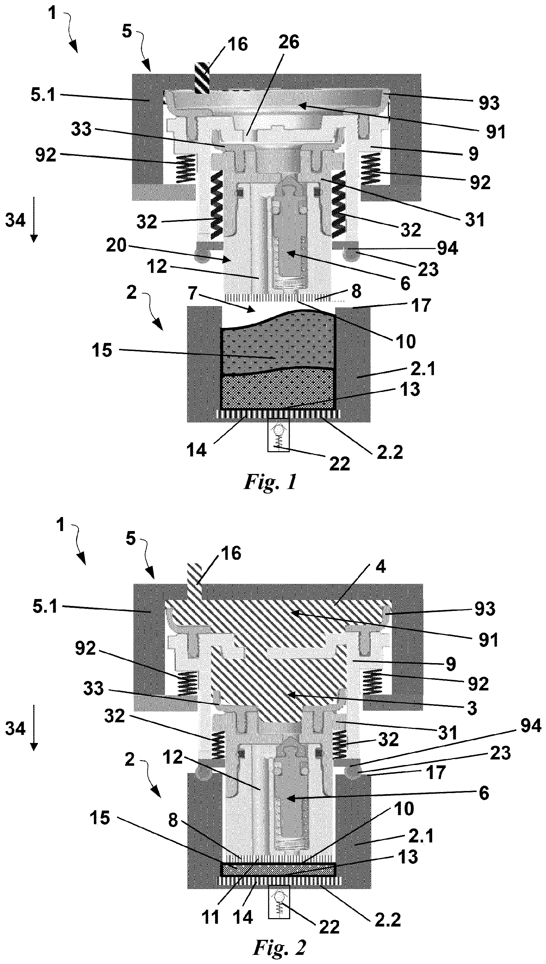

Fig. 1 zeigt einen Schnitt durch einen Teil einer Brüheinheit 1. Die Brüheinheit weist einen Brühkopf 5 und eine Brühkammer 2 auf. Die Brühkammer 2 ist in Fig. 1 in einer Offenstellung dargestellt. Das heißt, dass Brühkopf 5 und Brühkammer 2 derart voneinander beabstandet sind, dass die Brühkammer 2 nicht verschlossen ist. Beispielhaft könnte es vorgesehen sein, dass die Brühkammer 2 ortsfest an einem hier nicht dargestellten Träger festgelegt ist und der Brühkopf 5 beweglich gegenüber der Brühkammer 2 ausgebildet ist und in Bewegungsrichtung 34 sowie entgegen der Bewegungsrichtung 34 bewegt werden kann. Vorteilhafterweise wird das Brühkopfgehäuse 5.1 mit den im Brühkopfgehäuse 5.1 aufgenommenen oder mit dem im Brühkopfgehäuse 5.1 verbundenen Bestandteilen des Brühkopfes 5 in Bewegungsrichtung 34sowie entgegen der Bewegungsrichtung 34 bewegt.

In dem Brühkopfgehäuse 5.1 kann beweglich ein Hauptkolben 9 angeordnet oder gelagert sein, indem wiederum beweglich gelagert eine Infusionsbaugruppe 20 mit einem Brühfluidkanal 12, einem Ventil 6 und einem Tampermittel 8 geführt angeordnet sein kann. Der Hauptkolben 9 bildet an einem Ende eine Hauptkolbenkontaktfläche 94, insbesondere eine umlaufende Hauptkolbenkontaktfläche 94 aus, die an einem gegenüberliegenden Anschlag 17 der Brühkammer 2 zur Anlage bringbar ist, um die Brühkammer 2 zu schließen. Beispielhaft kann es vorgesehen sein, dass ein Axialdichtmittel 23 an der Hauptkolbenkontaktfläche 94 angeordnet ist, um die Brühkammer 2 sicher zu verschließen.

Im Brühkopf 5 kann fluidleitend nachgeordnet zu einer Brühfluidzuführung 16 ein hydraulischer Dichtzylinder 91 ausgebildet sein, der durch Teile des Hauptkolbens 9 und Teile des Brühkopfgehäuses 5.1 sowie eine dynamische Hauptkolbendichtung 93 ausgebildet wird. Über eine ungesteuerte Fluidverbindung in Form einer Fluiddurchlassöffnung 26 kann Brühfluid 4 von der Brühfluidzuführung 16 über den Dichtzylinder 91 in einen Hydraulikzylinder 3 gelangen, der seinerseits durch einen Teil des Hauptkolbens 9 gebildet wird. In dem Teil des Hauptkolbens 9, der als Hydraulikzylinder 3 dient, ist ein Arbeitskolben 31 gelagert, der teilweise durch eine dynamische Arbeitskolbendichtung 33 gebildet wird und kraftschlüssig mit dem Tampermittel 8 der Infusionsbaugruppe 20 verbunden ist. Gemäß der dargestellten Ausführungsform sind weitere Bestandteile der Infusionsbaugruppe 20 zumindest das Ventil 6 und der Brühfluidkanal 12. Des Weiteren ist der Fig. 1 zu entnehmen, dass das Getränkesubstrat 15 in die Brühkammer 2, welche im Wesentlichen aus dem Brühkammermantel 2.1 und dem Brühkammerboden 2.2 besteht, aufgenommen ist und unverdichtet vorliegt. In der dargestellten Ausführungsform bildet der Brühkammerboden 2.2 zudem das Gegenstück 14 mit der Druckfläche 13 aus. Die Wirkung des einströmenden Brühfluids 4 auf die Brüheinheit 1 und deren Brühkopf 5 sowie die vorteilhafte Wirkung der hydraulischen Funktionalitäten der Brüheinheit 1 werden anhand des Vergleichs der Fig. 1 und der Fig. 2 besser erkennbar, da Fig. 2 die Brüheinheit 1 gemäß der in Fig. 1 dargestellten Ausführungsform mit verschlossener Brühkammer 2 zeigt.

Die Fig. 2 zeigt im Vergleich zur Fig. 1 einen Zustand, in dem der Brühkopf 5, bevorzugt kraftlos, auf die Brühkammer 2 zubewegt wurde, um den Weg für den Hauptkolben 9 und den Arbeitskolben 31 zu reduzieren und ein Verschließen der Brühkammer 2 zu ermöglichen. Der Arbeitskolben 31 und der Hauptkolben 9 sind von der in Fig. 1 gezeigten Ausgangsposition in Fig. 2 in die Brühposition überführt, was lediglich dadurch erfolgte, dass Brühfluid 4 über die Brühfluidzuführung 16 unter Druck in die Brüheinheit 1 insbesondere in den Brühkopf 5, eingeleitet wurde. Denn dadurch wurde sowohl im hydraulischen Dichtzylinder 91 als auch im Hydraulikzylinder 3 ein Innendruck aufgebaut. Der Innendruck führt einerseits dazu, dass über den Hauptkolben 9 die Hauptkolbenkontaktflächen 94 an den Anschlag 17 der Brühkammer 2 gepresst werden. Gleichzeitig führt der Innendruck im Hydraulikzylinder 3 jedoch auch dazu, dass zunächst der Arbeitskolben 31 verschoben und gegen die Rückstellkraft der Arbeitskolbenrückstellelemente 32 das Tampermittel 8 am Getränkesubstrat 15 mit der Anpressfläche 10 zur Anlage gebracht wird, sodass das Getränkesubstrat 15 zwischen Anpressfläche 10 des Tampermittels 8 und Druckfläche 13 des Gegenstücks 14 verdichtet wird. Bei weiterem Ansteigen des Innendrucks, verursacht durch weiter einfließendes oder weiter eingepresstes Brühfluid 4 über die Brühfluidzuführung 16 in den Brühkopf 5 öffnet schließlich das selbsttätige oder eigengesteuerte Ventil 6 und gibt einen Fluidkanal 12 frei, der mit dem Hydraulikzylinder 3 fluidleitend in Verbindung steht und im Tampermittel 8 in eine Brühfluidauslassöffnung 11 mündet. Durch das druckbeaufschlagte Eindringen des Brühfluids 4 in die Brühkammer 2 über den Brühfluidkanal 12 und die Brühfluidauslassöffnung 11 durchströmt das Brühfluid 4 das verdichtete Getränkesubstrat 15 und kann am Cremaventil 22 aus der Brühkammer 2 in Form des gewünschten Getränks, beispielsweise eines Kaffees, austreten.

Sobald der Brühdruck im Hydraulikzylinder 3 nicht mehr gehalten oder überschritten wird, beispielsweise dadurch, dass kein Brühfluid 4 durch die Brühfluidzuführung 16 mehr nachgefördert wird, schließt das Ventil 6 selbsttätig wieder und es kann kein weiteres Brühfluid 4 mehr in den Fluidkanal 12 gelangen. Wird anschließend noch eine Drainage des Hydraulikzylinders 3 und/oder des hydraulischen Dichtzylinders 91 verursacht, zum Beispiel über ein hier nicht dargestelltes Drainageventil, so wird die Kraftbeaufschlagung der Kontaktfläche 94 und damit die Anpresswirkung des Hauptkolbens 9 an den Anschlag 17 der Brühkammer 2 aufgehoben oder reduziert und gleichzeitig der Arbeitskolben 31 mit dem daran angeordneten Tampermittel 8 aus der Brühposition zurück in die Ausgangsposition überführt, in dem die Arbeitskolbenrückstellelemente 32 den Arbeitskolben 31 vom Gegenstück 14 entgegen der Bewegungsrichtung 34 wegbewegen, bevorzugt bis wieder die Stellung des Arbeitskolbens 31 gegenüber dem Hauptkolben 9 erreicht ist, wie es in der Fig. 1 dargestellt ist. Entsprechend wird auch der Hauptkolben 9 infolge einer Drainage des hydraulischen Dichtzylinders 91 durch die Hauptkolbenrückstellelemente 92 von einer Brühposition in eine Ausgangsposition überführt, wie sie in Fig. 1 dargestellt ist. Zudem kann nach Beendigung des Brühvorgangs der Brühkopf 5 entgegen der Bewegungsrichtung 34 bevorzugt kraftlos von der in Fig. 2 dargestellten Verschlussposition in die in Fig. 1 dargestellte Ausgangsposition des Brühkopfes 5 überführt werden. Es ist ebenfalls denkbar, dass die Bewegung des Brühkopfes 5 entgegen der Bewegungsrichtung 34 gleichzeitig, alternativ leicht vor oder leicht nach der Drainage des Hydraulikzylinders 3 und/oder des Dichtzylinders 91 erfolgt und so die Brühkammer wieder geöffnet und in eine Offenstellung überführt wird.

Grundsätzlich soll zur Vermeidung unnötiger Wiederholungen im Hinblick auf die Merkmale, Eigenschaften und Vorteile der erfindungsgemäßen Vorrichtung auf die obige Beschreibung der ersten Ausführungsform Bezug genommen werden, und die weiteren Ausführungsformen im Wesentlichen anhand ihrer Unterscheidungsmerkmale zur ersten Ausführungsform beschrieben werden. Dies bedeutet, dass die vier gezeigten Ausführungsformen im Wesentlichen auf dem gleichen Grundgedanken der Erfindung beruhen und gleiche Bezugsziffern in den einzelnen Fig. gleiche oder funktionsgleiche bzw. hinsichtlich ihrer Funktion einander entsprechende Elemente bezeichnen.

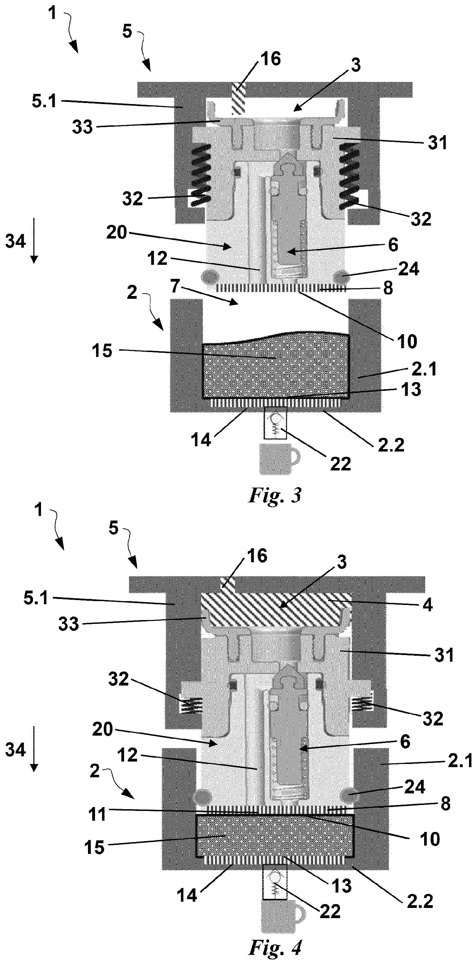

Fig. 3 zeigt einen Schnitt durch ein Teil einer Brüheinheit 1 gemäß einer zweiten Ausführungsform. Hier weist die Brüheinheit 1 einen Brühkopf 5 und eine Brühkammer 2 mit einem Brühkammermantel 2.1 und einen das Gegenstück 14 ausbildenden Brühkammerboden 2.2 auf. Das Getränk kann über das am Brühkammerboden 2.2 angeordnete Cremaventil 22 aus der Brüheinheit 1 ausgelassen werden. Beispielhaft kann es sich bei der Brühkammer 2 um einen in eine Siebträgermaschine einsetzbaren Siebträger handeln. Dieser kann von einer nicht gezeigten Beladestellung zum Befüllen mit gemahlenem Getränkesubstrat in die hier gezeigte Offenstellung überführt werden. Es ist zu erkennen, dass in Offenstellung der Brühkammer 2 die Brühkammer 2 nicht verschlossen ist und das Gegenstück 14 und Tampermittel 8 derart zueinander ausgerichtet sind, dass sie mittels einer Linearbewegung aufeinander zu bewegbar sind und wie im hier gezeigten Ausführungsbeispiel die Rotationsachsen von Gegenstück 14 und Tampermittel 8 zusammenfallen. Das Getränkesubstrat 15 wurde durch die Öffnung 7 der Brühkammer 2 in die Brühkammer 2 eingebracht. Zur Bewegung des Brühkopfes 5 in Richtung der Brühkammer 2 in Bewegungsrichtung 34 ist es denkbar, dass die Brühkammer 2 ortsfest an einem hier nicht dargestellten Rahmen oder Träger festgelegt ist und der Brühkopf 5 beweglich gegenüber dem Träger ausgebildet ist und der Brühkopf 5 mittels einer hier nicht dargestellten Antriebs- oder Verstelleinrichtung in Bewegungsrichtung 34 sowie entgegen der Bewegungsrichtung 34 gegenüber dem hier nicht dargestellten Träger bewegt werden kann. Der Arbeitskolben 31 ist kraftschlüssig mit dem Tampermittel 8 und der Infusionsbaugruppe 20 verbunden. Die Infusionsbaugruppe 20 weist wie schon in der ersten Ausführungsform zumindest ein Ventil 6, einen Fluidkanal 12, ein Tampermittel 8 und eine Fluidauslassöffnung 11 auf. Zudem ist am Umfang der Infusionsbaugruppe 20 ein Radialdichtmittel 24 zur Abdichtung der Brühkammer 2 in Brühposition des Arbeitskolbens 31 angeordnet.

Im hinteren Bereich des Brühkopfes 5 kann fluidleitend nachgeordnet zu einer Brühfluidzuführung 16 ein Hydraulikzylinder 3 ausgebildet sein, der durch Teile des Brühkopfgehäuses 5.1 ausgebildet wird. Im Brühkopfgehäuse 5.1 ist ein Arbeitskolben 31 gelagert, der teilweise durch eine dynamische Arbeitskolbendichtung 33 gebildet wird und kraftschlüssig mit dem Tampermittel 8 der Infusionsbaugruppe 20 verbunden ist. Die Wirkung des Brühfluids 4 auf die Brüheinheit 1 und insbesondere den Brühkammerkopf 5 wird wiederum anhand des Vergleichs der Fig. 3 und 4 besser erkennbar, da in Fig. 4 die Brüheinheit 1 gemäß der zweiten Ausführungsform in Verschlussposition der Brühkammer 2 und Brühposition des Arbeitskolbens 31 dargestellt ist. Die Überführung des Arbeitskolbens 31 und somit der daran kraftschlüssig angeordneten Tampermittel 8 der Infusionsbaugruppe 20 in die Brühposition kann gemäß der gezeigten Ausführungsform lediglich dadurch erfolgen, dass Brühfluid 4 über die Brühfluidzuführung 16 unter Druck in die Brüheinheit 1, insbesondere das Brühkammergehäuse 5.1, eingeleitet wird. Denn dadurch wird im Hydraulikzylinder 3 ein Innendruck aufgebaut. Dieser Innendruck führt dazu, dass der Arbeitskolben 31 gegen die Rückstellkraft der Arbeitskolbenrückstellelemente 32 das Tampermittel 8 über die Öffnung 7 der Brühkammer 2 in die Brühkammer einführt und das an dem Getränkesubstrat 15 zur Anlage bringt. Der durch den auf den Arbeitskolben 31 aufgrund des Innendrucks im Hydraulikzylinder 3 wirkende Druck wird mittels des Tampermittels 8 auf das Getränkesubstrat 15 übertragen, sodass dieses zwischen der Anpressoberfläche 10 des Tampermittels 8 und der Druckfläche 13 des Gegenstücks 14 verdichtet wird. Es ist zu erkennen, dass das Gegenstück 14 durch den Brühkammerboden 2.2 ausgebildet ist. Bei weiterem Ansteigen des Innendrucks im Hydraulikzylinder 3, verursacht durch weiter eingepresstes Brühfluid 4, öffnet schließlich das selbsttätige oder eigengesteuerte Ventil 6 und gibt den Brühfluidkanal 12 frei, der mit dem Hydraulikzylinder 3 fluidleitend in Verbindung steht und in die Brühfluidauslassöffnung 11 im Tampermittel 8 mündet. Die Brühkammer 2 wird, sofern der Arbeitskolben 31 in Brühposition überführt wurde, durch das Radialdichtmittel 24, das am Brühkammermantel 2.1 zur Anlage kommt, abgedichtet. Sobald der Brühdruck im Hydraulikzylinder 3 nicht mehr gehalten oder überschritten wird, beispielsweise dadurch, dass kein Brühfluid 4 mehr durch die Brühfluidzuführung 16 nachgefördert wird, schließt das Ventil 6 selbsttätig wieder und es kann kein weiteres Brühfluid 4 mehr in den Fluidkanal 12 gelangen. Falls im Anschluss eine Drainage des Hydraulikzylinders 3 durchgeführt wird, kann der Arbeitskolben 31 und somit auch das Tampermittel 8 zurück in die Ausgangsposition überführt werden, in dem die Arbeitskolbenrückstellelemente 32 den Arbeitskolben 31 vom Gegenstück 14 entgegen der Bewegungsrichtung 34 wegbewegen, bevorzugt bis wieder die Ausgangsposition des Arbeitskolbens 31 gegenüber der Brühkammer 2 erreicht ist, wie sie in Fig. 3 dargestellt ist. Gleichzeitig oder alternativ kurz vor oder leicht nach einer Drainage des Hydraulikzylinders 3 kann wiederum eine mechanische und bevorzugt automatische Öffnung der Brühkammer 2 einsetzen, indem der Brühkopf 5 entgegen der Bewegungsrichtung 34 von der Brühkammer 2 wegbewegt wird und somit die Öffnung 7, wie in Fig. 3 dargestellt, freigegeben wird.

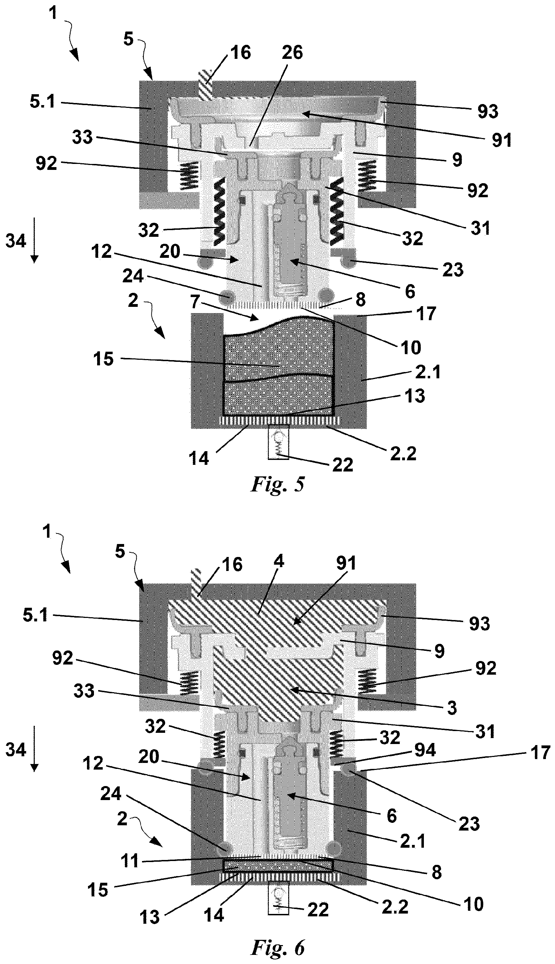

Die Fig. 5 und 6 zeigen eine dritte Ausführungsform der erfindungsgemäßen Brüheinheit 1 mit der Brühkammer 2 in Offenstellung (Fig. 5) und der Brühkammer 2 in Verschlussposition (Fig. 6). Zur näheren Erläuterung der Fig. 5 und 6 wird auf die Ausführungen zu den Fig. 1 und 2 verwiesen, da sowohl die Funktionsweise als auch der Aufbau im Wesentlichen identisch sind. Im Unterschied zur in den Fig. 1 und 2 gezeigten ersten Ausführungsform ist in der in den Fig. 5 und 6 dargestellten dritten Ausführungsform der erfindungsgemäßen Brüheinheit 1 an der Infusionsbaugruppe 20 ein Radialdichtmittel 24 angeordnet. Es ist zu erkennen, insbesondere in Fig. 6, dass in Verschlussposition der Brühkammer 2 und in Brühposition des Arbeitskolbens 31 die Brühkammer 2 durch zwei Dichtmittel, nämlich einerseits das Radialdichtmittel 24 und andererseits das Axialdichtmittel 23, abgedichtet ist. Es ist zu erkennen, dass in Brühposition das Radialdichtmittel 24 den Spalt zwischen Infusionsbaugruppe 20 und Brühkammermantel 2.1 abdichtend verschließt. Die zweite Abdichtung erfolgt mittels dem Axialdichtmittel 23, das zwischen dem Anschlag 17 der Brühkammer 2 und der Kontaktfläche 94 des Hauptkolbens 9 angeordnet ist und somit am Übergang zwischen Hauptkolben 9 und Brühkammer 2 abdichtend wirkt.

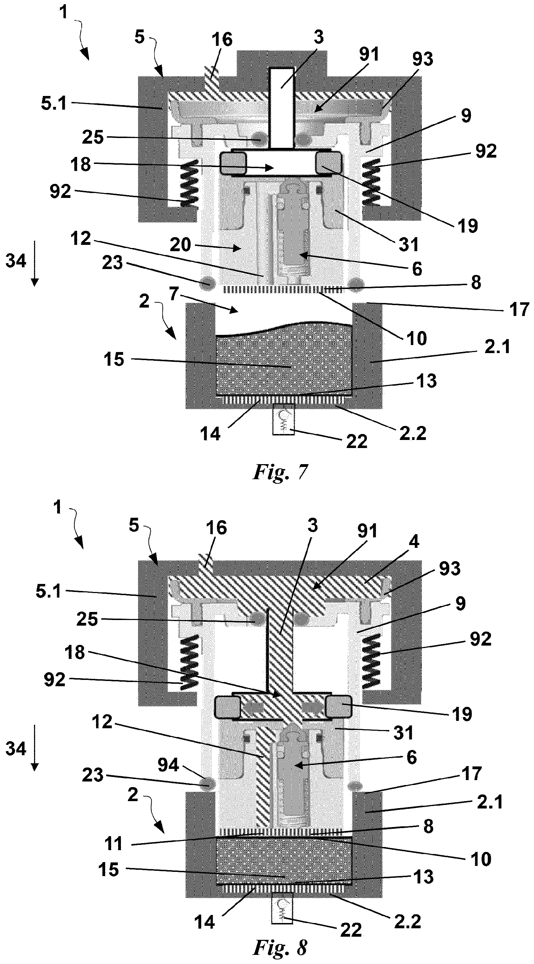

Die Fig. 7 und 8 zeigen einen Schnitt durch einen Teil einer Brüheinheit 1 gemäß einer vierten Ausführungsform, wobei in Fig. 7 die Brühkammer 2 in Offenstellung und der Arbeitskolben 31 in Ausgangsposition gezeigt ist, wohingegen in Fig. 8 die Brühkammer 2 in Verschlussposition und der Arbeitskolben 31 in Brühposition gezeigt sind. In dem Brühkammergehäuse 5.1 kann beweglich ein Hauptkolben 9 angeordnet oder gelagert sein, indem wiederum beweglich gelagert ein Arbeitskolben 31 und eine Infusionsbaugruppe 20 geführt angeordnet sein können. Der Hauptkolben 9 bildet an einem Ende eine Hauptkolbenkontaktfläche 94, insbesondere eine umlaufende Hauptkolbenkontaktfläche 94 aus, die an einem gegenüberliegenden Anschlag 17 der Brühkammer 2 zur Anlage kommt, um die Brühkammer 2 zu schließen, wie es in Fig. 8 dargestellt ist. Auf Seiten des Hauptkolbens 9 kann die Hauptkolbenkontaktfläche 94 teilweise oder abschnittsweise durch Axialdichtmittel 23, bevorzugt in Form einer Ringdichtung, ausgebildet sein.

Im Brühkopfgehäuse 5.1 kann fluidleitend nachgeordnet zu einer Brühfluidzuführung 16 ein hydraulischer Dichtzylinder 91 ausgebildet sein, der durch Teile des Hauptkolbens 9 und Teile des Brühkopfgehäuses 5.1 sowie eine dynamische Hauptkolbendichtung 93 ausgebildet wird. Über eine ungesteuerte Fluidverbindung in Form einer Brühfluiddurchlassöffnung 26 kann Brühfluid 4 von der Brühfluidzuführung 16 über den Dichtzylinder 91 in den Hydraulikzylinder 3 gelangen, der gemäß der hier dargestellten vierten Ausführungsform durch einen Teil der Arretiereinrichtung 18 gebildet wird. In dem Hauptkolben 9 ist ein Arbeitskolben 31 gelagert, der auf seiner einen Seite kraftschlüssig mit der Arretiereinrichtung 18 und auf seiner anderen Seite kraftschlüssig mit der Infusionsbaugruppe 20 und somit auch dem Tampermittel 8 verbunden ist. Mit anderen Worten sind Arretiereinrichtung 18, Arbeitskolben 31 und Infusionsbaugruppe 20 gemäß der hier gezeigten Ausführungsform derart angeordnet, dass in Bewegungsrichtung 34 der Arbeitskolben 31 an die Arretiereinrichtung 18 angrenzt und die Infusionsbaugruppe an den Arbeitskolben 31 angrenzt. Hierbei ist jedoch zu beachten, dass die Arretiereinrichtung 18 und der Fluidkanal 12 der Infusionsbaugruppe 20 fluidleitend verbunden sind und durch Öffnung des Ventils 6 Brühfluid 4 von der Arretiereinrichtung 18 in den Fluidkanal 12 fließen kann. In Fig. 7 liegt das Getränkesubstrat 15 wiederum unverdichtet in der Brühkammer 2 vor.

Demgegenüber ist in Fig. 8, welche den Arbeitskolben 31 in Brühposition und die Brühkammer 2 in Verschlussposition zeigt, das Getränkesubstrat 15 zwischen der Anpressoberfläche 10 des Tampermittels 8 und der Druckfläche 13 des Gegenstücks 14 verdichtet. Es ist wiederum zu erkennen, dass der Brühkammerboden 2.2 das Gegenstück 14 ausbildet. In Verschlussposition der Brühkammer 2 und Brühposition des Hauptkolbens 9 liegt der Hauptkolben 9 kraftbeaufschlagt mit der Hauptkolbenkontaktfläche 94 an dem Anschlag 17 der Brühkammer 2 an. Zudem ist der Arbeitskolben 31 in Brühposition überführt worden und bewirkt eine Verdichtung des Getränkesubstrats 15 in der Brühkammer 2. Die Kraftbeaufschlagung der Kontaktflächen 94 des Hauptkolbens und die Überführung des Arbeitskolbens 31 in Brühposition erfolgt lediglich dadurch, dass Brühfluid 4 über die Brühfluidzuführung 16 unter Druck in die Brüheinheit 1, insbesondere den Brühkopf 5, eingeleitet wurde. Denn dadurch wurde sowohl im hydraulischen Dichtzylinder 91 als auch im Hydraulikzylinder 3 ein Innendruck aufgebaut. Der Innendruck führt einerseits dazu, dass über den Hauptkolben 9 die Hauptkolbenkontaktfläche 94, hier als Axialdichtmittel 23 in Form einer Ringdichtung ausgebildet, und der Anschlag 17 der Brühkammer 2 gegeneinander gepresst werden. Andererseits führt der Innendruck in Dichtzylinder 91 und Hydraulikzylinder 3 dazu, dass zunächst der Arbeitskolben 31 in Brühposition verschoben wird, sodass er am Getränkesubstrat 15 innerhalb der Brühkammer 2 zur Anlage kommt und auf das Getränkesubstrat 15 verdichtend einwirkt. Zudem wird der Arbeitskolben 31 durch die Arretiereinrichtung 18 sicher über den gesamten Brühvorgang in Brühposition gehalten. Dazu ist der Hydraulikzylinder 3, der vorliegend Teil der Arretiereinrichtung 18 ist, derart ausgebildet, dass bei Ansteigen des Innendrucks im Hydraulikzylinder 3 nicht nur der Arbeitskolben 31 in die Brühposition überführt wird, sondern nach Überführung des Arbeitskolben 31 in Brühposition zudem des Klemmmittel 19 an eine Innenwandung des Hauptkolbens 9 angepresst wird, sodass ein Verschieben des Arbeitskolbens 31 entgegen der Bewegungsrichtung 34 während des Brühvorgangs verhindert wird.

Bei weiterem Ansteigen des Innendrucks, verursacht durch weiter einfließendes oder weiter eingepresstes Brühfluid 4, öffnet schließlich das selbsttätige und selbstgesteuerte Ventil 6 und gibt den Fluidkanal 12 frei, der mit dem Hydraulikzylinder 3 und gemäß der vorliegenden Ausführungsform der Arretiereinrichtung 18 fluidleitend in Verbindung steht und in der Brühfluidauslassöffnung 11 im Tampermittel 8 mündet.

Zum Abschluss des Brühvorgangs, sobald der Brühdruck im Hydraulikzylinder 3 nicht mehr gehalten oder überschritten wird, beispielsweise dadurch dass kein Brühfluid 4 durch die Brühfluidzuführung 16 mehr nachgefördert wird, schließt das Ventil 6 selbsttätig wieder und es kann kein weiteres Brühfluid 4 mehr in den Fluidkanal 12 gelangen. Wird dann noch eine Drainage des Hydraulikzylinders 3 und/oder des hydraulischen Dichtzylinders 91 verursacht, zum Beispiel über ein hier nicht dargestelltes Drainageventil, so wird die Kraftbeaufschlagung des Anschlags 17 sowie der Hauptkolbenkontaktfläche 94 und damit die Anpresswirkung zwischen Anschlag 17 und Kontaktfläche 94 aufgehoben oder reduziert und gleichzeitig der Arbeitskolben 31 aus der Brühposition zurück in die Ausgangsposition überführt, indem die Klemmmittel 19 von der Wandung des Hauptkolbens 9 gelöst werden und somit die Anpresswirkung zwischen Wandung des Hauptkolbens 9 und Klemmmittel 19 aufgehoben wird und anschließend der Arbeitskoben entgegen der Bewegungsrichtung 34 vom Gegenstück 14 wegbewegt werden kann, bevorzugt bis wieder die Stellung des Arbeitskolbens 31 gegenüber dem Hauptkolben 9 erreicht ist, wie sie in der Fig. 7 dargestellt ist. Es ist denkbar, dass die Überführung der Brühkammer von der Verschlussposition in eine Offenstellung durch eine mechanische oder automatische Bewegung des gesamten Brühkopfes 5 entgegen der Bewegungsrichtung 34 unterstützt wird.

### Bezugszeichen

- 1: Brüheinheit
- 2: Brühkammer
- 2.1: Brühkammermantel
- 2.2: Brühkammerboden
- 3: Hydraulikzylinder
- 31: Arbeitskolben
- 32: Arbeitskolbenrückstellelement
- 33: Arbeitskolbendichtung
- 34: Bewegungsrichtung Arbeitskolben
- 4: Brühfluid
- 5: Brühkopf
- 5.1: Brühkopfgehäuse
- 6: Ventil
- 7: Öffnung
- 8: Tampermittel
- 9: Hauptkolben
- 91: Dichtzylinder
- 92: Hauptkolbenückstellelement
- 93: Hauptkolbendichtung
- 94: Hauptkolbenkontaktfläche
- 10: Anpressoberfläche
- 11: Brühfluidauslassöffnung
- 12: Brühfluidkanal
- 13: Druckfläche
- 14: Gegenstück
- 15: Getränkesubstrat
- 16: Brühfluidzuführung
- 17: Anschlag
- 18: Arretiereinrichtung
- 19: Klemmmittel
- 20: Infusionsbaugruppe
- 22: Cremaventil
- 23: Axialdichtmittel
- 24: Radialdichtmittel
- 25: Arretierdichtmittel
- 26: Brühfluiddurchlassöffnung

## Patentansprüche

1. Brüheinheit (1) für eine Getränkezubereitungsvorrichtung, insbesondere eine Kaffee- und/oder Espressomaschine,
mit einer Brühkammer (2), die zur Aufnahme eines Getränkesubstrats (15), insbesondere gemahlenen Kaffeepulvers, über eine Öffnung (7) der Brühkammer (2) eingerichtet ist und einen, bevorzugt der Öffnung (7) gegenüberliegenden, Brühkammerboden (2.2) und einen an den Brühkammerboden (2.2) angrenzenden, bevorzugt zylindrischen, insbesondere die Öffnung (7) begrenzenden, Brühkammermantel (2.1) aufweist,
sowie mit einem Brühkopf (5), der ein Tampermittel (8) zum Verdichten des Getränkesubstrats (15) aufweist, das beweglich gegenüber der Brühkammer (2) gelagert ist und in einer Brühposition zumindest teilweise in die Brühkammer (2) eingeführt ist, wobei beim Einführen des Tampermittels (8) in die Brühkammer (2) eine Linearbewegung des Tampermittels (8) entlang des Brühkammermantels (2.1) eine Verdichtung des Getränkesubstrats (15) zwischen einer Anpressoberfläche (10) des Tampermittels (8) und einer Druckfläche (13) eines Gegenstücks (14) bewirkt,
**dadurch gekennzeichnet,**
**dass** das Tampermittel (8) brühfluidleitend mit einer Brühfluidzuführung (16) verbunden ist, wobei ein Hydraulikzylinder (3) des Brühkopfes (5) ebenfalls brühfluidleitend mit der Brühfluidzuführung (16) verbunden ist, dessen Arbeitskolben (31) so mit dem Tampermittel (8) verbunden ist, dass ein Füllen des Hydraulikzylinders (3) mit Brühfluid (4) eine Bewegung des Tampermittels (8) in Richtung des Gegenstücks (14) bewirkt und das Tampermittel (8) über die Anpressoberfläche (10) einen Tamper-Druck auf das Getränkesubstrat (15) aufbringt,
wobei der Hydraulikzylinder **(3)** fluidleitend zwischen der Brühfluidzuführung **(16)** und dem Tampermittel **(8)** angeordnet ist und ein selbsttätiges oder eigengesteuertes Ventil **(6),** das bevorzugt als Gegendruckventil ausgebildet ist, am Übergang zwischen dem Tampermittel **(8)** und dem Hydraulikzylinder **(3)** so angeordnet ist, dass es beim Erreichen eines Brühdrucks in dem Hydraulikzylinder **(3)** eine verschließbare Fluidverbindung zwischen dem Hydraulikzylinder **(3)** und dem Tampermittel **(8)** freigibt,
so dass im geöffneten Zustand des Ventils (6) das Brühfuid (4) aus dem Hydraulikzylinder (3) in die Brühkammer (2) fließen kann, und das Ventil (6) den Abfluss des Brühfluids (4) in die Brühkammer (2) reguliert und derart dimensioniert und ausgestaltet ist, dass unabhängig von der Menge des Getränkesubstrats (15) in der Brühkammer (2) ein definierter Tamper-Druck auf das Getränkesubstrat (15) aufbringbar ist.

2. Brüheinheit nach Anspruch 1,
**dadurch gekennzeichnet,**
**dass** der Brühkammerboden (2.2) das Gegenstück ausbildet und/oder der Brühkopf (5) mittels einer Antriebs- oder Verstelleinrichtung zwischen Betriebspositionen verstellbar ist, wobei der Brühkopf (5) linear in Richtung des Brühkammerbodens (2.2), bevorzugt kraftlos, verstellbar ist und in Verschlussposition derart an der Brühkammer (2) anliegt, dass die Öffnung (7) der Brühkammer (2) in Verschlussposition verschlossen ist.

3. Brüheinheit nach Anspruch 1,
**dadurch gekennzeichnet,**
**dass** der Brühkammerboden (2.2) das Gegenstück (14) ausbildet und die Brühkammer (2) mittels einer Antriebs- oder Verstelleinrichtung zwischen unterschiedlichen Betriebspositionen verstellbar ist und die Brühkammer (2) linear in Richtung des Brühkopfes (5) verstellbar ist und in Veschlussposition derart am Brühkopf (5) anliegt, dass die Öffnung (7) der Brühkammer (2) in Verschlussposition verschlossen ist.

4. Brüheinheit nach Anspruch 1,
**dadurch gekennzeichnet,**
**dass** das Tampermittel (8) den Brühkammerboden (2.2) ausbildet und die Brühkammer (2) mittels einer Antriebs- oder Verstelleinrichtung zwischen unterschiedlichen Betriebspositionen verstellbar ist und die Brühkammer (2) linear in Richtung des Gegenstücks (14) verstellbar ist und in Verschlussposition derart am Gegenstück (14) anliegt, dass die Öffnung (7) der Brühkammer (2) in Verschlussposition verschlossen ist.

5. Brüheinheit nach einem der Ansprüche 1 bis 4,
**dadurch gekennzeichnet,**
**dass** zwischen einem Brühkopfgehäuse (5.1) des Brühkopfes (5) und einem Hauptkolben (9) ein hydraulischer Dichtzylinder (91) ausgebildet ist, der fluidleitend mit der Brühfluidzuführung (16) des Brühkopfes (5) und dem Hydraulikzylinder (3) verbunden ist und bei einer Füllung mit Brühfluid (4) eine lineare Bewegung des Hauptkolbens (9) in Richtung des Gegenstücks (14) bewirkt, wobei zwischen dem Arbeitskolben (31) und dem Hauptkolben (9) der Hydraulikzylinder (3) ausgebildet ist, so dass der Arbeitskolben (31) im Hauptkolben (9) linear beweglich in Richtung des Gegenstücks (14) angeordnet ist.

6. Brüheinheit nach Anspruch 5
**dadurch gekennzeichnet,**
**dass** der Arbeitskolben (31) mit zumindest einem Arbeitskolbenrückstellelement (32) zusammenwirkt, das den Arbeitskolben (31) von einer Brühposition in eine Ausgangsposition bewegt, wenn der auf den Arbeitskolben (31) wirkende Überdruck reduziert oder aufgehoben wird, und/oder der Hauptkolben (9) mit zumindest einem Hauptkolbenrückstellelement (92) zusammenwirkt, das den Hauptkolben (9) von einer Brühposition in eine Ausgangsposition bewegt, wenn der auf den Hauptkolben (9) wirkende Überdruck reduziert oder aufgehoben wird.

7. Brüheinheit nach einem der Ansprüche 1 bis 6,
**dadurch gekennzeichnet,**
**dass** der Arbeitskolben (31), das Tampermittel (8) und/oder eine Infusionsbaugruppe (20), die das Ventil (6) aufweist, eine mit Brühfluid (4) beaufschlagbare Tamperdichtung aufweist, die zumindest in Brühposition an der Brühkammer (2), insbesondere dem Brühkammermantel (2.1), zur Anlage kommt, wobei die Beaufschlagung mit einem Fluid, insbesondere Brühfluid (4), eine Ausdehnung der Tamperdichtung bewirkt und die Tamperdichtung zumindest in Brühposition derart ausgedehnt ist, dass die Brühkammer (2) abgedichtet ist.

8. Brüheinheit nach einem der Ansprüche 1 bis 7,
**dadurch gekennzeichnet,**
**dass** das Ventil (6) die Beaufschlagung des Hauptkolbens (9) und/oder der Arretiereinrichtung (18) und/oder der Tamperdichtung mit Brühfluid (4) reguliert.

9. Getränkezubereitungsvorrichtung, insbesondere eine Kaffee- und/oder Espressomaschine,
aufweisend einen Wassertank, eine Durchflussmesseinheit, eine Pumpeinheit und eine Heizeinheit sowie eine Brüheinheit (1) nach einem der Ansprüche 1 bis 8.

10. Verfahren zum Betrieb einer Brüheinheit für eine Getränkezubereitungsvorrichtung, insbesondere eine Kaffee- und/oder Espressomaschine, wobei die Brühkammer (2), die zur Aufnahme eines Getränkesubstrats (15), insbesondere gemahlenem Kaffeepulver, über eine Öffnung (7) der Brühkammer (2) eingerichtet ist und einen, bevorzugt der Öffnung (7) gegenüberliegenden, Brühkammerboden (2.2) und einen an den Brühkammerboden (2.2) angrenzenden, bevorzugt zylindrischen, insbesondere die Öffnung (7) begrenzenden, Brühkammermantel (2.1) aufweist, in einer Beladestellung mit Getränkesubstrat (15) beladen wird, und wobei nach Beladung der Brühkammer (2) und Überführung der Brühkammer (2) in eine Offenstellung das Getränkesubstrat (15) in der Brühkammer (2) mittels eines Tampermittels (8) verdichtet wird, wobei beim Vorhandensein einer Mindestmenge an Getränkesubstrat (15) in der Brühkammer (2) beim Einführen des Tampermittels (8) in die Brühkammer (2) in Richtung des Brühkammerbodens (2.2) eine Anpressoberfläche (10) des Tampermittels (8) mit dem Getränkesubstrat (15) in Kontakt gebracht wird,
**dadurch gekennzeichnet,**
**dass** ein Hydraulikzylinder (3) des Brühkopfes (5) mit Brühfluid (4) gefüllt wird, wobei das Tampermittel (8) und der Hydraulikzylinder (3) brühfluidleitend mit der Brühfluidzuführung (16) verbunden sind und der Hydraulikzylinder **(3)** fluidleitend zwischen der Brühfluidzuführung **(16)** und dem Tampermittel **(8)** angeordnet ist, und wobei ein Arbeitskolben (31) des Hydraulikzylinders (3) so mit dem Tampermittel (8) verbunden ist, dass das Füllen des Hydraulikzylinders (3) mit Brühfluid (4) eine Bewegung des Tampermittels (8) in Richtung des Gegenstücks (14) bewirkt und mittels des Tampermittels (8) über die Anpressoberfläche (10) ein Tamper-Druck auf das Getränkesubstrat (15) aufgebracht wird, und wobei und ein selbsttätiges oder eigengesteuertes Ventil **(6),** das bevorzugt als Gegendruckventil ausgebildet ist, am Übergang zwischen dem Tampermittel **(8)** und dem Hydraulikzylinder **(3)** angeordnet ist, und dass beim Erreichen eines Brühdrucks in dem Hydraulikzylinder **(3)** eine verschließbare Fluidverbindung zwischen dem Hydraulikzylinder **(3)** und dem Tampermittel **(8)** über das Ventil (6) freigegeben wird, und so ein durchgängiger, insbesondere unverzweigter, Fluidkanal (12), der die Brühfluidzuführung (16) mit zumindest einer Brühfluidauslassöffnung (11) des Brühkopfes (5), die bevorzugt im Tampermittel (8) angeordnet ist, fluidleitend verbindet.

11. Verfahren nach Anspruch 10,
**dadurch gekennzeichnet,**
**dass** die Brühkammer (2) vor Freigabe der verschließbaren Fluidverbindung verschlossen wird, wobei die Brühkammer (2) auf ein Gegenstück (14) oder der Brühkopf (5) auf die Brühkammer (2), bevorzugt kraftlos, zubewegt wird, so dass ein Verschließen der Brühkammer (2) durch den Brühkopf (5) oder das Gegenstück (14) bewirkt wird.

12. Verfahren nach einem der Ansprüche 10 oder 11,
**dadurch gekennzeichnet,**
**dass** zwischen dem Arbeitskolben (31) und einem Hauptkolben (9) der Hydraulikzylinder (3) ausgebildet ist und zwischen Brühkopfgehäuse (5.1) und dem Hauptkolben (9) ein hydraulischer Dichtzylinder (91) ausgebildet ist, der fluidleitend mit der Brühfluidzuführung (16) des Brühkopfes (5) und dem Hydraulikzylinder (3) verbunden ist und beim Verschließen der Brühkammer (2) und/oder beim Verdichten des Getränkesubstrats (15) mit Brühfluid (4) gefüllt wird, so dass eine lineare Bewegung des Hauptkolbens (9) in Richtung des Gegenstücks (14) bewirkt wird.

13. Verfahren nach einem der Ansprüche 10 bis 12,
**dadurch gekennzeichnet,**
**dass** der Arbeitskolben (31) mittels zumindest einem Arbeitskolbenrückstellelement (32) von einer Brühposition in eine Ausgangsposition bewegt wird, wenn der auf den Arbeitskolben (31) wirkende Überdruck reduziert oder aufgehoben wird und/oder der Hauptkolben (9) mittels zumindest einem Hauptkolbenrückstellelement (92) von einer Brühposition in eine Ausgangsposition bewegt wird, wenn der auf den Hauptkolben (9) wirkende Überdruck reduziert oder aufgehoben wird.

14. Verfahren nach einem der Ansprüche 10 bis 13,
**dadurch gekennzeichnet,**
**dass** eine am Arbeitskolben (31), Tampermittel (8) und/oder der Infusionsbaugruppe (20) mit Brühfluid (4) beaufschlagbare Tamperdichtung zur Abdichtung der Brühkammer (2) an der Brühkammer (2), insbesondere dem Brühkammermantel (2.1), zur Anlage gebracht wird, wobei die Tamperdichtung durch Beaufschlagung mit einem Brühfluid (4) ausgedehnt wird und die Ausdehnung der Tamperdichtung eine Abdichtung der Brühkammer (2) bewirkt.

15. Verfahren nach einem der Ansprüche 10 bis 14,
**dadurch gekennzeichnet,**
**dass** die Beaufschlagung des Hauptkolbens (9) und/oder der Arretiereinrichtung (18) und/oder der Tamperdichtung mit Brühfluid (4) mittels eines Ventils (6) reguliert wird, und/oder der Druck im Dichtzylinder und/oder Hydraulikzylinder während des gesamten Brühvorgangs im Wesentlichen konstant gehalten wird.
